# EUROPEAN PATENT SPECIFICATION

(11) **EP 2 226 329 B1**
(45) Date of publication and mention of the grant of the patent: **10.07.2013**
(21) Application number: 09154125.0
(22) Date of filing: 02.03.2009
(51) Int. Cl.: C07F 17/00, C07F 17/02, A61K 31/28

(54) **Metal-containing platensimycin analogues**
Metallhaltige Platensimycin-Analoge
Analogues de la platensimycine contenant du métal

(43) Date of publication of application: 08.09.2010
(73) Proprietor: Ruhr-Universität Bochum, 44801 Bochum (DE)
(72) Inventor: Metzler-Nolte, Nils, 44797, Bochum (DE); Gasser, Gilles, 44892, Bochum (DE); Patra, Malay, 44795, Bochum (DE)
(74) Representative: Viering, Jentschura & Partner

(56) References cited:
- DATABASE CA [Online] CHEMICAL ABSTRACTS SERVICE, COLUMBUS, OHIO, US; FAN, RUI-LAN ET AL: "Structures and characteristic infrared spectra of N-alkyl- and N-aryl-3-ferrocenylacrylamides" XP002538629 retrieved from STN Database accession no. 141:54434 & GUANGPUXUE YU GUANGPU FENXI , 23(5), 866-869 CODEN: GYGFED; ISSN: 1000-0593, 2003,
- DATABASE CA [Online] CHEMICAL ABSTRACTS SERVICE, COLUMBUS, OHIO, US; COVILLE, NEIL J. ET AL: "Ferrocenoylacetanilides" XP002538630 retrieved from STN Database accession no. 94:47447 & SOUTH AFRICAN JOURNAL OF CHEMISTRY , 33(2), 71-3 CODEN: SAJCDG; ISSN: 0379-4350, 1980,

## Description

### Field of the Invention

The present invention lies on the field of pharmacology, drug design and organic chemistry and relates to metal-containing platensimycin analogues as well as pharmaceutical compositions comprising such compounds and methods for preparing such compounds. The present invention is further directed to the use of these compounds, alone or in combination with other therapeutic agents, for the alleviation, prevention and/or treatment of diseases and disorders, such as obesity, cancer, diabetes, fungal infections, bacterial infections, malarial infections and other apicomplexan protozoal diseases.

### Background of the Invention

Infections caused by bacteria are a growing medical concern as many of the bacterial pathogens are resistant to various common antibiotics. This resistance to existing antibiotics is a growing problem worldwide, particularly in hospitals, where antibiotics are heavily used (D. Haebich, F. von Nussbaum, ChemMedChem 2006, 1, 951) Since bacteria can share their resistance genes, antimicrobial resistance generated in patient care facilities ultimately spreads into surrounding communities. As a result, bacterial infections become more difficult to treat.

During the last two decades, the number of antibacterial agents that have been discovered and introduced into the market has steadily declined and could not meet the challenges posed by emerging bacterial resistance to the existing antibiotics (M. Leeb, Nature 2004, 431, 892). Therefore, new structural classes of antibiotics that exert their activity through novel mechanisms of action are urgently needed.

The discovery of platensimycin, a natural product extracted from *Streptomyces platensis,* by Wang *et al.* was an important contribution to antibiotic research (Wang et al. Nature 2006, 441, 358). The compound displays potent activity against Gram-positive bacterial strains (methicillin-resistant *Staphylococcus aureus,* vancomycin resistant *Enterococcus faecalis*) by selectively inhibiting the FabF enzyme in bacterial fatty acid biosynthesis. Recently, it has been found that platensimycin and certain analogues thereof are also effective inhibitors of human fatty acid synthetase (FAS) and have thus been proposed as candidate drugs for the treatment of obesity, diabetes and cancer (International patent publication WO 2008/039327). However, at present the use of platensimycin and its known analogues has been hampered by low *in vivo* efficacy and its costly and laborious synthesis, which is due to its complex structure that includes a lipophilic tetracyclic entity containing six stereo-centers and four quaternary carbon atoms.

### Summary of the Invention

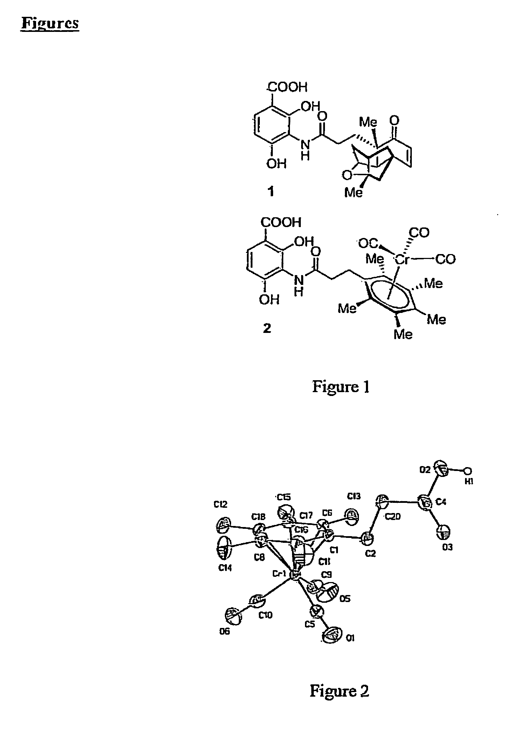

The inventors of the present invention have now found that metal-containing analogues of platensimycin according to formula I represent promising alternatives to the known platensimycin derivatives for use as antibiotic and therapeutic agents while at the same time being easier to synthesize. The present invention is based on the inventors finding that the complex tetracyclic moiety of platensimycin (Figure 1) can effectively be mimicked by an organometallic moiety. Thus, in a first aspect the present invention is directed to the compounds according to claims 1-9.

Also disclosed herein are compounds of formula I: 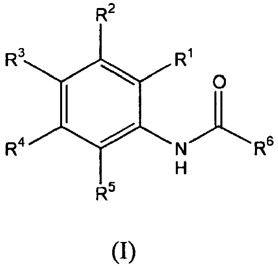 wherein:
R¹, R², R³, R⁴ and R⁵ are independently selected from the group consisting of hydrogen, unsubstituted or substituted C₁-C₁₀ alkyl, unsubstituted or substituted C₁-C₁₀ alkenyl, unsubstituted or substituted C₁-C₁₀ alkynyl, unsubstituted or substituted C₃-C₈ cycloalkyl, unsubstituted or substituted C₁-C₁₀ alkoxy, unsubstituted or substituted C₃-C₈ cycloalkoxy, unsubstituted or substituted C₆-C₁₄ aryl, an unsubstituted or substituted 5- to 10-membered heteroaryl wherein 1 to 4 ring atoms are independently selected from nitrogen, oxygen or sulfur, an unsubstituted or substituted 5- to 10-membered heteroalicyclic ring wherein 1 to 3 ring atoms are independently nitrogen, oxygen or sulfur, -OR, -C(O)R, -C(O)OR , -C(O)NRR', -NRR', - S(O)₂R, -S(O)₂OR and -S(O)₂NRR' ;
R⁶ is 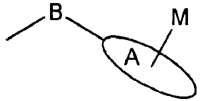 wherein:
   B is selected from the group consisting of unsubstituted or substituted C₁-C₁₀ alkyl, unsubstituted or substituted C₁-C₁₀ alkenyl, unsubstituted or substituted C₁-C₁₀ alkynyl or unsubstituted or substituted C₁-C₁₀ alkoxy;
   A is selected from the group consisting of unsubstituted or substituted cyclopentadienyl, unsubstituted or substituted C₄-C₁₄ aryl, an unsubstituted or substituted 5- to 10-membered heteroaryl wherein 1 to 4 ring atoms are independently selected from nitrogen, oxygen or sulfur, unsubstituted or substituted C₃-C₂₀ cycloalkyl and an unsubstituted or substituted 3- to 16-membered heteroalicyclic ring wherein 1 to 4 ring atoms are independently selected from nitrogen, oxygen or sulfur; and
   M is a moiety of the formula Me(X)ₘ,
      wherein:
      Me is a metal selected from the group consisting of Ti, Zr, Hf, V, Nb, Ta, Cr, Mo, W, Mn, Tc, Re, Fe, Ru, Os, Co, Rh, Ir, Ni, Pd and Pt;
      each X is independently selected from the group consisting of azido, cyanido, isocyanido, thiocyanato, isothiocyanato, nitroso, dimethylsulfoxido, halo, carbonyl, unsubstituted or substituted C₁-C₁₀ alkyl, unsubstituted or substituted C₁-C₁₀ alkoxy, cyclopentadienyl, unsubstituted or substituted C₄-C₁₄ aryl, an unsubstituted or substituted 5- to 14-membered heteroaryl wherein 1 to 4 ring atoms are independently selected from nitrogen, oxygen or sulfur, unsubstituted or substituted C₃-C₁₆ cycloalkyl and an unsubstituted or substituted 3- to 16-membered heteroalicyclic ring wherein 1 to 4 ring atoms are independently selected from nitrogen, oxygen or sulfur; and
      m is an integer from 1 to 6;
R and R' are independently selected from the group consisting of hydrogen, unsubstituted C₁-C₄alkyl, and C₁-C₄alkyl substituted with C₁-C₄ alkoxy;
or a pharmaceutically acceptable salt or prodrug thereof.

In a further aspect, the present invention relates to pharmaceutical compositions according to claims 10 and 11.

In a further aspect, the present invention is directed to the use of a compound according to any one of claims 1-9 or a pharmaceutical composition according to claim 10 or 11 for the manufacture of a pharmaceutical for the treatment and/or prevention of obesity, obesity-related diseases and disorders, cancer, diabetes, fungal infections, bacterial infections, malarial infections and other apicomplexan protozoal diseases in a subject in need thereof.

In still another aspect, the present invention relates to a method for the preparation of a compound according to claims 1-9, comprising reacting an aryl having the Formula IX 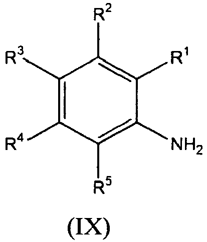 wherein:
R¹, R², R³, R⁴ and R⁵ are defined as in claim 13.

### Brief description of the drawings

Figure 1 shows the structure of platensimycin (1) and a pentamethyl-benzene-Cr-tricarbonyl analogue of platensimycin (2) according to the invention.
Figure 2 shows an ORTEP plot of compound 5.

### Detailed Description

### Definitions

Unless otherwise stated the following terms used in the specification and claims have the meanings discussed below:
"Alkyl" refers to a saturated aliphatic hydrocarbon including straight chain, or branched chain groups. Preferably, the alkyl group has 1 to 10 carbon atoms (whenever a numerical range; e.g., "1-10", is stated herein, it means that the group, in this case the alkyl group, may contain 1 carbon atom, 2 carbon atoms, 3 carbon atoms, etc. up to and including 10 carbon atoms). More specifically, it may be a medium size alkyl having 1 to 6 carbon atoms or a lower alkyl having 1 to 4 carbon atoms e. g., methyl, ethyl, n-propyl, isopropyl, butyl, iso-butyl, tert-butyl and the like. The alkyl group may be substituted or unsubstituted. When substituted, the substituent group(s) is one or more, for example one or two groups, individually selected from the group consisting of C₃-C₈ cycloalkyl, C₆-C₁₄ aryl, 5-10 membered heteroaryl wherein 1 to 4 ring atoms are independently selected from nitrogen, oxygen or sulfur, 5-10 membered heteroalicyclic wherein 1 to 3 ring atoms are independently nitrogen, oxygen or sulfur, hydroxy, C₁-C₁₀ alkoxy, C₃-C₈ cycloalkoxy, aryloxy, arylalkyl, heteroarylalkyl, cycloalkylalkyl, heterocycloalkyl, mercapto, alkylthio, arylthio, cyano, isocyano, halo, carbonyl, thiocarbonyl, O-carbamyl, N-carbamyl, O-thiocarbamyl, N-thiocarbamyl, C-amido, N-amido, C-carboxy, O-carboxy, nitro, silyl, sulfinyl, sulfonyl, amino, and -NR¹⁵R¹⁶ where R¹⁵ and R¹⁶ are independently selected from the group consisting of hydrogen, C₁-C₄ alkyl, C₃-C₈ cycloalkyl, C₆-C₁₄ aryl, carbonyl, acetyl, sulfonyl, amino, and trifluoromethanesulfonyl, or R¹⁵ and R¹⁶, together with the nitrogen atom to which they are attached, combine to form a five-or six-membered heteroalicyclic ring.
A "cycloalkyl" group refers to an all-carbon monocyclic ring (i.e., rings which share an adjacent pair of carbon atoms) of 3 to 8 ring atoms wherein one of more of the rings does not have a completely conjugated pi-electron system e.g., cyclopropyl, cyclobutyl, cyclopentyl, cyclohexyl, cyclobutenyl, cyclopentenyl, cyclohexenyl, and the like. Examples, without limitation, of cycloalkyl groups are cyclopropane, cyclobutane, cyclopentane, cyclopentene, cyclohexane, adamantane, cyclohexadiene, cycloheptane and, cycloheptatriene. A cycloalkyl group may be substituted or unsubstituted. When substituted, the substituent group(s) is one or more, for example one or two groups, individually selected from C₁-C₁₀ alkyl, C₃-C₈ cycloalkyl, C₆-C₁₄ aryl, 5-10 membered heteroaryl wherein 1 to 4 ring atoms are independently selected from nitrogen, oxygen or sulfur, 5-10 membered heteroalicyclic wherein 1 to 3 ring atoms are independently nitrogen, oxygen or sulfur, hydroxy, C₁-C₁₀alkoxy, C₃-C₈cycloalkoxy, aryloxy, arylalkyl, heteroarylalkyl, heterocycloalkyl, alkylaryl, alkylheteroaryl, alkylheterocyclyl, alkylcycloalkyl, mercapto, alkylthio, arylthio, cyano, isocyano, halo, carbonyl, thiocarbonyl, O-carbamyl, N-carbamyl, O-thiocarbamyl, N-thiocarbamyl, C-amido, N-amido, C-carboxy, O-carboxy, nitro, silyl, sulfinyl, sulfonyl, amino, and -NR¹⁵R¹⁶, with R¹⁵ and R¹⁶ as defined above.
An "alkenyl" group refers to an alkyl group, as defined herein, consisting of at least two carbon atoms and at least one carbon-carbon double bond e. g., ethenyl, propenyl, butenyl or pentenyl and their structural isomeric forms such as 1-or 2-propenyl, 1-, 2-, or 3-butenyl and the like.
An "alkynyl" group refers to an alkyl group, as defined herein, consisting of at least two carbon atoms and at least one carbon-carbon triple bond e. g., acetylene, ethynyl, propynyl, butynyl, or pentynyl and their structural isomeric forms as described above.
An "aryl" group refers to an all-carbon monocyclic or fused-ring polycyclic (i.e., rings which share adjacent pairs of carbon atoms) groups of 6 to 14 ring atoms and having a completely conjugated pi-electron system. Examples, without limitation, of aryl groups are phenyl, naphthalenyl and anthracenyl. The aryl group may be substituted or unsubstituted. When substituted, the substituent group(s) is one or more, for example one, two, three, four or five substituents, independently selected from the group consisting of C₁-C₁₀ alkyl, C₃-C₈ cycloalkyl, C₆-C₁₄ aryl, 5-10 membered heteroaryl wherein 1 to 4 ring atoms are independently selected from nitrogen, oxygen or sulfur, 5-10 membered heteroalicyclic wherein 1 to 3 ring atoms are independently nitrogen, oxygen or sulfur, alkylaryl, alkylheteroaryl, alkylcycloalkyl, alkylheterocyclyl, heteroarylalkyl, cycloalkylalkyl, heterocycloalkylalkyl, hydroxy, C₁-C₁₀ alkoxy, C₃-C₈ cycloalkoxy, aryloxy, mercapto, alkylthio, arylthio, cyano, isocyano, halo, trihalomethyl, carbonyl, thiocarbonyl, O-carbamyl, N-carbamyl, O-thiocarbamyl, N-thiocarbamyl, C-amido, N-amido, C-carboxy, O-carboxy, nitro, silyl, sulfinyl, sulfonyl, amino, and -NR¹⁵R¹⁶, with R¹⁵ and R¹⁶ as defined above. Preferably the substituent(s) is/are independently selected from chloro, fluoro, bromo, methyl, ethyl, hydroxy and methoxy.
A "heteroaryl" group refers to a monocyclic or fused aromatic ring (i.e., rings which share an adjacent pair of atoms) of 5 to 10 ring atoms in which one, two, three or four ring atoms are selected from the group consisting of nitrogen, oxygen and sulfur and the rest being carbon. Examples, without limitation, of heteroaryl groups are pyridyl, pyrrolyl, furyl, thienyl, imidazolyl, oxazolyl, isoxazolyl, thiazolyl, isothiazolyl, pyrazolyl, 1,2,3-triazolyl, 1,2,4-triazolyl, 1,2,3-oxadiazolyl, 1,2,4-oxadiazolyl, 1,2,5-oxadiazolyl, 1,3,4-oxadiazolyl, 1,3,4-triazinyl, 1,2,3-triazinyl, benzofuryl, isobenzofuryl, benzothienyl, benzotriazolyl, isobenzothienyl, indolyl, isoindolyl, 3H-indolyl, benzimidazolyl, benzothiazolyl, benzoxazolyl, quinolizinyl, quinazolinyl, pthalazinyl, quinoxalinyl, cinnnolinyl, napthyridinyl, quinolyl, isoquinolyl, tetrazolyl, 5,6,7,8-tetrahydroquinolyl, 5, 6, 7, 8-tetrahydroisoquinolyl, purinyl, pteridinyl, pyridinyl, pyrimidinyl, carbazolyl, xanthenyl or benzoquinolyl. The heteroaryl group may be substituted or unsubstituted. When substituted, the substituent group(s) is one or more, for example one, two, three or four substituents, independently selected from the group consisting of C₁-C₁₀ alkyl, C₃-C₈ cycloalkyl, C₆-C₁₄ aryl, 5-10 membered heteroaryl wherein 1 to 4 ring atoms are independently selected from nitrogen, oxygen or sulfur, 5-10 membered heteroalicyclic wherein 1 to 3 ring atoms are independently nitrogen, oxygen or sulfur, arylalkyl, alkylaryl, cycloalkylalkyl, alkylcycloalkyl, heterocycloalkylalkyl, alkylheterocycloalkyl, alkylheteroaryl, hydroxy, C₁-C₁₀alkoxy, C₃-C₈cycloalkoxy, aryloxy, mercapto, alkylthio, arylthio, cyano, isocyano, halo, trihalomethyl, carbonyl, thiocarbonyl, O-carbamyl, N-carbamyl, O-thiocarbamyl, N-thiocarbamyl, C-amido, N-amido, C-carboxy, O-carboxy, nitro, silyl, sulfinyl, sulfonyl, amino, and -NR¹⁵R¹⁶, with R¹⁵ and R¹⁶ as defined above. Preferably the substituent(s) is/are independently selected from chloro, fluoro, bromo, methyl, ethyl, hydroxy and methoxy.
A "heteroalicyclic" group refers to a monocyclic or fused ring of 5 to 10 ring atoms containing one, two, or three heteroatoms in the ring which are selected from the group consisting of nitrogen, oxygen and -S(O)ₙ where n is 0-2, the remaining ring atoms being carbon. The rings may also have one or more double bonds. However, the rings do not have a completely conjugated pi-electron system. Examples, without limitation, of heteroalicyclic groups are pyrrolidine, piperidine, piperazine, morpholine, imidazolidine, tetrahydropyridazine, tetrahydrofuran, thiomorpholine, tetrahydropyridine, and the like. The heteroalicyclic ring may be substituted or unsubstituted. When substituted, the substituted group (s) is one or more, for example one, two, or three substituents, independently selected from the group consisting of C₁-C₁₀ alkyl, C₃-C₈ cycloalkyl, C₆-C₁₄ aryl, 5-10 membered heteroaryl wherein 1 to 4 ring atoms are independently selected from nitrogen, oxygen or sulfur, 5-10 membered heteroalicyclic wherein 1 to 3 ring atoms are independently nitrogen, oxygen or sulfur, alkylaryl, alkylheteroaryl, alkylcycloalkyl, alkylheterocyclyl, arylalkyl, heteroarylalkyl, cycloalkylalkyl, hydroxy, C₁-C₁₀ alkoxy, C₃-C₈ cycloalkoxy, aryloxy, mercapto, alkylthio, arylthio, cyano, isocyano, halo, trihalomethyl, carbonyl, thiocarbonyl, O-carbamyl, N-carbamyl, O-thiocarbamyl, N-thiocarbamyl, C-amido, N-amido, C-carboxy, O-carboxy, nitro, silyl, sulfinyl, sulfonyl, amino, and -NR¹⁵R¹⁶, with R¹⁵ and R¹⁶ as defined above. The substituent(s) is/are for example independently selected from chloro, fluoro, bromo, methyl, ethyl, hydroxy, methoxy, nitro, carboxy, methoxycarbonyl, sulfonyl, or amino.
A "hydroxy" group refers to an -OH group.
An "alkoxy" group refers to an -O-unsubstituted alkyl and -O-substituted alkyl group, as defined herein. Examples include and are not limited to methoxy, ethoxy, propoxy, butoxy, and the like.
A "cycloalkoxy" group refers to an -O-cycloalkyl group, as defined herein. One example is cyclopropyloxy.
An "aryloxy" group refers to both an -O-aryl and an -O-heteroaryl group, as defined herein. Examples include and are not limited to phenoxy, napthyloxy, pyridyloxy, furanyloxy, and the like.
A "mercapto" group refers to an -SH group.
An "alkylthio" group refers to both an S-alkyl and an -S-cycloalkyl group, as defined herein. Examples include and are not limited to methylthio, ethylthio, and the like.
An "arylthio" group refers to both an -S-aryl and an -S-heteroaryl group, as defined herein. Examples include and are not limited to phenylthio, napthylthio, pyridylthio, furanylthio, and the like.
A "sulfinyl" group refers to a -S(O)-R" group, wherein, R" is selected from the group consisting of hydrogen, hydroxy, alkyl, cycloalkyl, aryl, heteroaryl (bonded through a ring carbon) and heteroalicyclic (bonded through a ring carbon), as defined herein.
A "sulfonyl" group refers to a -S(O)₂R" group wherein, R" is selected from the group consisting of hydrogen, hydroxy, alkyl, cycloalkyl, aryl, heteroaryl (bonded through a ring carbon) and heteroalicyclic (bonded through a ring carbon), as defined herein.
A "trihalomethyl" group refers to a -CX₃ group wherein X is a halo group as defined herein e. g., trifluoromethyl, trichloromethyl, tribromomethyl, dichlorofluoromethyl, and the like.
"Carbonyl" refers to a -C(=O)-R" group, where R" is selected from the group consisting of hydrogen, alkyl, cycloalkyl, aryl, heteroaryl (bonded by a ring carbon) and heteroalicyclic (bonded by a ring carbon), as defined herein. Representative examples include and the not limited to acetyl, propionyl, benzoyl, formyl, cyclopropylcarbonyl, pyridinylcarbonyl, pyrrolidin-1-ylcarbonyl, and the like. Alternatively, "carbonyl" may relate to one or more C(=O) groups that are bound or complexed with a metal atom. Representative examples include and are not limited to chromiumtricarbonyl -Cr(CO)₃.
A "thiocarbonyl" group refers to a -C(=S)-R" group, with R" as defined herein.
"C-carboxy" and "carboxy" which are used interchangeably herein refer to a -C(=O)O-R" group, with R" as defined herein, e. g. -COOH, methoxycarbonyl, ethoxycarbonyl, benzyloxycarbonyl, and the like.
An "O-carboxy" group refers to a -OC(=O)R" group, with R" as defined herein, e.g. methylcarbonyloxy, phenylcarbonyloxy, benzylcarbonyloxy, and the like.
An "acetyl" group refers to a -C(=O)CH₃ group.
A "carboxylic acid" group refers to a C-carboxy group in which R" is hydrogen.
A "halo" or "halogen" group refers to fluorine, chlorine, bromine or iodine.
A "cyano" group refers to a -CN group.
An "isocyano" group refers to an -NC group.
An "azido" group refers to an -N₃ group.
A "nitroso" group refers to an -NO group.
A "thiocyanato" group refers to an -SCN group.
An "isothiocyanato" group refers to an -NCS group.
A "dimethylsulfoxide" group refers to a (CH₃)₂S(=O) group.
A "nitro" group refers to a -NO₂ group.
An "O-carbamyl" group refers to a -OC(=O)NR¹⁵R¹⁶ group, with R¹⁵ and R¹⁶ as defined herein.
An "N-carbamyl" group refers to a R¹⁶OC (=O) NR¹⁵- group, with R¹⁵ and R¹⁶ as defined herein.
An "O-thiocarbamyl" group refers to a -OC(=S)NR¹⁵R¹⁶ group, with R¹⁵ and R¹⁶ as defined herein.
An "N-thiocarbamyl" group refers to a R¹⁶OC(=S)NR¹⁵- group, with R¹⁵ and R¹⁶ as defined herein.
An "amino" group refers to an -NR¹⁵R¹⁶ group, wherein R¹⁵ and R¹⁶ are independently hydrogen or unsubstituted lower alkyl, e.g, -NH₂, dimethylamino, diethylamino, ethylamino, methylamino, and the like.
A "C-amido" group refers to a -C(=O)NR¹⁵R¹⁶ group, with R¹⁵ and R¹⁶ as defined herein. For example, R¹⁵ is hydrogen or unsubstituted C₁-C₄ alkyl and R¹⁶ is hydrogen, C₁-C₄ alkyl optionally substituted with heteroalicyclic, hydroxy, or amino. For example, C(=O)NR¹⁵R¹⁶ may be aminocarbonyl, dimethylaminocarbonyl, diethylaminocarbonyl, diethylaminoethylaminocarbonyl, ethylaminoethylaminocarbonyl, and the like.
An "N-amido" group refers to an R¹⁶C(=O)NR¹⁵- group, with R¹⁵ and R¹⁶ as defined herein, e.g. acetylamino, and the like.
A "pharmaceutical composition" refers to a mixture of one or more of the compounds described herein, or physiologically/pharmaceutically acceptable salts or prodrugs thereof, with other chemical components, such as physiologically/pharmaceutically acceptable carriers and excipients. The purpose of a pharmaceutical composition is to facilitate administration of a compound to an organism.
A "prodrug" refers to an agent which is converted into the parent drug in vivo. Prodrugs are often useful because, in some situations, they may be easier to administer than the parent drug. They may, for instance, be bioavailable by oral administration whereas the parent drug is not. The prodrug may also have improved solubility in pharmaceutical compositions over the parent drug. An example, without limitation, of a prodrug would be a compound which is administered as an ester (the "prodrug") to facilitate transmittal across a cell membrane where water solubility is detrimental to mobility but then is metabolically hydrolyzed to the carboxylic acid, the active entity, once inside the cell where water solubility is beneficial. A prodrug may be converted into the parent drug by various mechanisms, including enzymatic processes and metabolic hydrolysis.

A further example of a prodrug might be a short polypeptide, for example, without limitation, a 2-10 amino acid polypeptide, bonded through a terminal amino group to a carboxy group of a compound of this invention wherein the polypeptide is hydrolyzed or metabolized in vivo to release the active molecule.

Additionally, it is contemplated that compounds of the invention would be metabolized by enzymes in the body of the organism such as a human being to generate a metabolite that has the desired functionality.

As used herein, a "physiologically/pharmaceutically acceptable carrier" refers to a carrier or diluent that does not cause significant irritation to an organism and does not abrogate the biological activity and properties of the administered compound.

A "pharmaceutically acceptable excipient" refers to an inert substance added to a pharmaceutical composition to further facilitate administration of a compound. Examples, without limitation, of excipients include calcium carbonate, calcium phosphate, various sugars and types of starch, cellulose derivatives, gelatin, vegetable oils and polyethylene glycols.

As used herein, the term "pharmaceutically acceptable salt" refers to those salts which retain the biological effectiveness and properties of the parent compound. Such salts include, but are not restricted to: (1) an acid addition salt which is obtained by reaction of the free base of the parent compound with inorganic acids such as hydrochloric acid, hydrobromic acid, nitric acid, phosphoric acid, sulfuric acid, and perchloric acid and the like, or with organic acids such as acetic acid, oxalic acid, (D) or (L) malic acid, maleic acid, methanesulfonic acid, ethanesulfonic acid, p-toluenesulfonic acid, salicylic acid, tartaric acid, citric acid, succinic acid or malonic acid and the like, preferably hydrochloric acid or (L)-malic acid; or (2) salts formed when an acidic proton present in the parent compound either is replaced by a metal ion, e. g., an alkali metal ion, such as sodium or potassium, an alkaline earth ion, such as magnesium or calcium, or an aluminum ion; or coordinates with an organic base such as ethanolamine, diethanolamine, triethanolamine, tromethamine, N-methylglucamine, and the like.

The term "cancer" refers to any cancer caused by the proliferation of neoplastic cells, such as solid tumors, neoplasms, carcinomas, sarcomas, leukemias, lymphomas and the like. In particular, cancers that may be treated by the compounds and compositions of the invention include, but are not limited to: Cardiac: sarcoma (angiosarcoma, fibrosarcoma, rhabdomyosarcoma, liposarcoma), myxoma, rhabdomyoma, fibroma, lipoma and teratoma; Lung: bronchogenic carcinoma (squamous cell, undifferentiated small cell, undifferentiated large cell, adenocarcinoma), alveolar (bronchiolar) carcinoma, bronchial adenoma, sarcoma, lymphoma, chondromatous hamartoma, mesothelioma; Gastrointestinal: esophagus (squamous cell carcinoma, adenocarcinoma, leiomyosarcoma, lymphoma), stomach (carcinoma, lymphoma, leiomyosarcoma), pancreas (ductal adenocarcinoma, insulinoma, glucagonoma, gastrinoma, carcinoid tumors, vipoma), small bowel (adenocarcinoma, lymphoma, carcinoid tumors, Karposi's sarcoma, leiomyoma, hemangioma, lipoma, neurofibroma, fibroma), large bowel (adenocarcinoma, tubular adenoma, villous adenoma, hamartoma, leiomyoma); Genitourinary tract: kidney (adenocarcinoma, Wilm's tumor [nephroblastoma], lymphoma, leukemia), bladder and urethra (squamous cell carcinoma, transitional cell carcinoma, adenocarcinoma), prostate (adenocarcinoma, sarcoma), testis (seminoma, teratoma, embryonal carcinoma, teratocarcinoma, choriocarcinoma, sarcoma, interstitial cell carcinoma, fibroma, fibroadenoma, adenomatoid tumors, lipoma); Liver: hepatoma (hepatocellular carcinoma), cholangiocarcinoma, hepatoblastoma, angiosarcoma, hepatocellular adenoma, hemangioma; Bone: osteogenic sarcoma (osteosarcoma), fibrosarcoma, malignant fibrous histiocytoma, chondrosarcoma, Ewing's sarcoma, malignant lymphoma (reticulum cell sarcoma), multiple myeloma, malignant giant cell tumor chordoma, osteochronfroma (osteocartilaginous exostoses), benign chondroma, chondroblastoma, chondromyxofibroma, osteoid osteoma and giant cell tumors; Nervous system: skull (osteoma, hemangioma, granuloma, xanthoma, osteitis deformans), meninges (meningioma, meningiosarcoma, gliomatosis), brain (astrocytoma, medulloblastoma, glioma, ependymoma, germinoma [pinealoma], glioblastoma multiform, oligodendroglioma, schwannoma, retinoblastoma, congenital tumors), spinal cord neurofibroma, meningioma, glioma, sarcoma); Gynecological: uterus (endometrial carcinoma), cervix (cervical carcinoma, pre-tumor cervical dysplasia), ovaries (ovarian carcinoma [serous cystadenocarcinoma, mucinous cystadenocarcinoma, unclassified carcinoma], granulosa-thecal cell tumors, Sertoli-Leydig cell tumors, dysgerminoma, malignant teratoma), vulva (squamous cell carcinoma, intraepithelial carcinoma, adenocarcinoma, fibrosarcoma, melanoma), vagina (clear cell carcinoma, squamous cell carcinoma, botryoid sarcoma (embryonal rhabdomyosarcoma), fallopian tubes (carcinoma); Hematologic: blood (myeloid leukemia [acute and chronic], acute lymphoblastic leukemia, chronic lymphocytic leukemia, myeloproliferative diseases, multiple myeloma, myelodysplastic syndrome), Hodgkin's disease, non-Hodgkin's lymphoma [malignant lymphoma]; Skin: malignant melanoma, basal cell carcinoma, squamous cell carcinoma, Karposi's sarcoma, moles dysplastic nevi, lipoma, angioma, dermatofibroma, keloids, psoriasis; and Adrenal glands: neuroblastoma.

"Obesity" is a condition in which there is an excess of body fat. The operational definition of obesity is based on the Body Mass Index (BMI), which is calculated as body weight per height in meters squared (kg/m²). "Obesity" refers to a condition whereby an otherwise healthy subject has a Body Mass Index (BMI) greater than or equal to 30 kg/m², or a condition whereby a subject with at least one co-morbidity has a BMI greater than or equal to 27 kg/m². An "obese subject" is an otherwise healthy subject with a Body Mass Index (BMI) greater than or equal to 30 kg/m² or a subject with at least one co-morbidity with a BMI greater than or equal to 27 kg/m². As used herein, the term "obesity" is meant to encompass all of the above definitions of obesity.

"Obesity-related diseases or disorders" include, but are not limited to, overeating, binge eating, and bulimia, hypertension, diabetes, elevated plasma insulin concentrations and insulin resistance, dyslipidemias, hyperlipidemia, endometrial, breast, prostate and colon cancer, osteoarthritis, obstructive sleep apnea, cholelithiasis, gallstones, heart disease, hypertension, abnormal heart rhythms and arrythmias, myocardial infarction, congestive heart failure, coronary heart disease, coronary artery disease, myocardial infarction, angina pectoris, sudden death, stroke, polycystic ovary disease, cerebral infarction, cerebral thrombosis, transient ischemic attack, craniopharyngioma, the Prader-Willi Syndrome, Frohlich's syndrome, GH-deficient subjects, normal variant short stature, Turner's syndrome, and other pathological conditions showing reduced metabolic activity or a decrease in resting energy expenditure as a percentage of total fat-free mass, e.g, children with acute lymphoblastic leukemia. Further examples of obesity-related disorders are metabolic syndrome, insulin resistance syndrome, sexual and reproductive dysfunction, such as infertility, hypogonadism in males and hirsutism in females, gastrointestinal motility disorders, such as obesity-related gastro-esophageal reflux, respiratory disorders,

such as obesity-hypo ventilation syndrome (Pickwickian syndrome), cardiovascular disorders, inflammation, such as systemic inflammation of the vasculature, arteriosclerosis, hypercholesterolemia, hyperuricaemia, lower back pain, gallbladder disease, gout, and kidney cancer, nicotine addiction, substance addiction and alcoholism.

The term "diabetes," as used herein, includes both insulin-dependent diabetes mellitus (i.e., BDDM, also known as type I diabetes) and non-insulin-dependent diabetes mellitus (i.e., NIDDM, also known as Type II diabetes). Type I diabetes, or insulin-dependent diabetes, is the result of an absolute deficiency of insulin, the hormone which regulates glucose utilization. Type JJ diabetes, or insulin-independent diabetes (i.e., non-insulin-dependent diabetes mellitus), often occurs in the face of normal, or even elevated levels of insulin and appears to be the result of the inability of tissues to respond appropriately to insulin. Most of the Type II diabetics are also obese.

"Bacterial infection" refers to the infection of an organism with pathogenic bacteria. Such bacteria include, but are not limited to, *Staphylococcus aureus, Staphylococcus epidermidis, Staphylococcus hemolyticus, Streptococcus pyogenes, Streptococcus pneumoniae, Enterococcus faecalis, Enterococcus faecium, Pseudomonas aeruginosa, Actinobacter calcoaeticus, Escherichia coli* and *Stenotrophomonas maltophilia.*

"Fungal infection" refers to the infection of an organism with pathogenic fungi. Examples for such fungi are the species of the genus *Candida*, such as *Candida albicans.*

"Treat", "treating" and "treatment" refer to a method of alleviating or abrogating a disease or disorder and/or its attendant symptoms.

"Prevent", "preventing" and "prevention" refer to a method of hindering a disease or disorder from occuring, i.e. a prophylactic method.

"Organism" refers to any living entity comprised of at least one cell. A living organism can be as simple as, for example, a single eukaryotic cell or as complex as a mammal, including a human being.

"Therapeutically effective amount" refers to that amount of the compound being administered which will relieve to some extent one or more of the symptoms of the disorder being treated.

### Compounds

Disclosed herein are compounds of formula I: 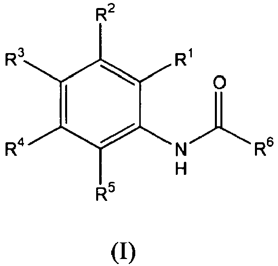 wherein:
R¹, R², R³, R⁴ and R⁵ are independently selected from the group consisting of hydrogen, unsubstituted or substituted C₁-C₁₀ alkyl, unsubstituted or substituted C₁-C₁₀ alkenyl, unsubstituted or substituted C₁-C₁₀ alkynyl, unsubstituted or substituted C₃-C₈ cycloalkyl, unsubstituted or substituted C₁-C₁₀ alkoxy, unsubstituted or substituted C₃-C₈ cycloalkoxy, unsubstituted or substituted C₆-C₁₄ aryl, an unsubstituted or substituted 5- to 10-membered heteroaryl wherein 1 to 4 ring atoms are independently selected from nitrogen, oxygen or sulfur, an unsubstituted or substituted 5- to 10-membered heteroalicyclic ring wherein 1 to 3 ring atoms are independently nitrogen, oxygen or sulfur, -OR, -C(O)R, -C(O)OR , -C(O)NRR', -NRR', - S(O)₂R, -S(O)₂OR and -S(O)₂NRR';
R⁶ is 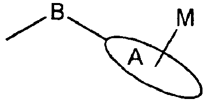 wherein:
   B is selected from the group consisting of unsubstituted or substituted C₁-C₁₀ alkyl, unsubstituted or substituted C₁-C₁₀ alkenyl, unsubstituted or substituted C₁-C₁₀ alkynyl or unsubstituted or substituted C₁-C₁₀ alkoxy;
   A is selected from the group consisting of unsubstituted or substituted cyclopentadienyl, unsubstituted or substituted C₄-C₁₄ aryl, an unsubstituted or substituted 5- to 10-membered heteroaryl wherein 1 to 4 ring atoms are independently selected from nitrogen, oxygen or sulfur, unsubstituted or substituted C₃-C₂₀ cycloalkyl and an unsubstituted or substituted 3- to 16-membered heteroalicyclic ring wherein 1 to 4 ring atoms are independently selected from nitrogen, oxygen or sulfur; and
   M is a moiety of the formula Me(X)ₘ,
      wherein:
      Me is a metal selected from the group consisting of Ti, Zr, Hf, V, Nb, Ta, Cr, Mo, W, Mn, Tc, Re, Fe, Ru, Os, Co, Rh, Ir, Ni, Pd and Pt;
      each X is independently selected from the group consisting of azido, cyano, isocyano, thiocyanato, isothiocyanato, nitroso, dimethylsulfoxido, halo, carbonyl, unsubstituted or substituted C₁-C₁₀ alkyl, unsubstituted or substituted C₁-C₁₀ alkoxy, cyclopentadienyl, unsubstituted or substituted C₄-C₁₄ aryl, an unsubstituted or substituted 5- to 14-membered heteroaryl wherein 1 to 4 ring atoms are independently selected from nitrogen, oxygen or sulfur, unsubstituted or substituted C₃-C₁₆ cycloalkyl and an unsubstituted or substituted 3- to 16-membered heteroalicyclic ring wherein 1 to 4 ring atoms are independently selected from nitrogen, oxygen or sulfur; and
      m is an integer from 1 to 6;
R and R' are independently selected from the group consisting of hydrogen, unsubstituted C₁-C₄ alkyl, and C₁-C₄ alkyl substituted with C₁-C₄ alkoxy;
or a pharmaceutically acceptable salt or prodrug thereof.

Disclosed are also compounds of formula I, wherein B is C₁-C₄ alkyl. Thus, the compounds have formula II: 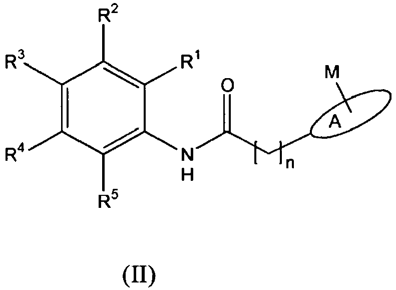 wherein:
n is an integer from 1 to 4; and
R¹, R², R³, R⁴, R⁵, R⁶, A and M are as defined above.

Disclosed herein are also compounds of formula I or formula II R¹ and R⁵ are independently selected from hydrogen and -OR; R² is -C(O)OR; and/or R³, R⁴ and R⁵ are hydrogen. R is as defined above and, in a specific embodiment, is hydrogen. Furthermore, described herein are compounds of formula III: 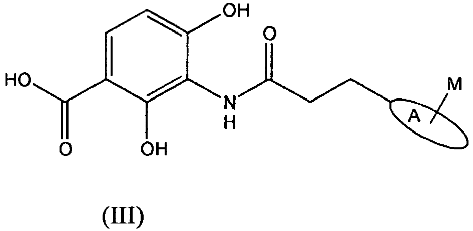 wherein A and M are as defined above.

Disclosed herein are also compounds, wherein A is selected from the group consisting of unsubstituted or substituted C₄-C₁₄ aryl. In certain cases, A is unsubstituted or substituted C₅-C₁₄ aryl, such as unsubstituted or substituted phenyl or unsubstituted or substituted cyclopentadienyl. When substituted the substituent may be one or more groups independently selected from the group consisting of unsubstituted or substituted C₁-C₁₀ alkyl, unsubstituted or substituted C₁-C₁₀ alkenyl, unsubstituted or substituted C₁-C₁₀ alkynyl, unsubstituted or substituted C₃-C₈ cycloalkyl, unsubstituted or substituted C₁-C₁₀ alkoxy, unsubstituted or substituted C₃-C₈ cycloalkoxy, unsubstituted or substituted C₆-C₁₄ aryl, an unsubstituted or substituted 5- to 10-membered heteroaryl wherein 1 to 4 ring atoms are independently selected from nitrogen, oxygen or sulfur, an unsubstituted or substituted 5- to 10-membered heteroalicyclic ring wherein 1 to 3 ring atoms are independently nitrogen, oxygen or sulfur, -OR, -C(O)R , -C(O)OR , -C(O)NRR', -NRR', - S(O)₂K -S(O)₂OK and -S(O)₂NRR', with R and R' being as defined above. Preferred substituents for A are C₁-C₄ alkyl, C₁-C₄ alkoxy, halo and C(O)R. Exemplary substituents are methyl, ethyl, OMe, OEt, C(O)Me, C(O)Et and Cl.

Described herein are also compounds, wherein X is selected from the group consisting of unsubstituted or substituted C₄-C₁₄ aryl, unsubstituted or substituted C₄-C₁₄ heteroaryl, unsubstituted or substituted C₄-C₁₄ heterocycloalkyl, unsubstituted or substituted C₄-C₁₄ cycloalkyl, substituted C₁-C₁₀ alkyl, carbonyl, halo and cyano. X may for example be selected from the group consisting of unsubstituted or substituted cyclopentadienyl, unsubstituted or substituted benzene, unsubstituted or substituted 1,4,7-triazacyclononan, chloro, cyano and carbonyl. When substituted the substituent may be one or more groups independently selected from the group consisting of unsubstituted or substituted C₁-C₁₀ alkyl, unsubstituted or substituted C₁-C₁₀ alkenyl, unsubstituted or substituted C₁-C₁₀ alkynyl, unsubstituted or substituted C₃-C₈ cycloalkyl, unsubstituted or substituted C₁-C₁₀ alkoxy, unsubstituted or substituted C₃-C₈ cycloalkoxy, unsubstituted or substituted C₆-C₁₄ aryl, an unsubstituted or substituted 5- to 10-membered heteroaryl wherein 1 to 4 ring atoms are independently selected from nitrogen, oxygen or sulfur, an unsubstituted or substituted 5- to 10-membered heteroalicyclic ring wherein 1 to 3 ring atoms are independently nitrogen, oxygen or sulfur, cyano, isocyano, -OR, -C(O)R , -C(O)OR , -C(O)NRR', -NRR', - S(O)₂K -S(O)₂OK and -S(O)₂NRR', with R and R' being as defined above. X may, for example, be C₁-C₁₀ alkyl substituted with cyano or isocyano. The substituents for X may also be selected from the group consisting of C₁-C₄ alkyl, C₁-C₄ alkoxy, halo and C(O)R. Exemplary substituents are methyl, ethyl, OMe, OEt, C(O)Me, C(O)Et and Cl.

Described herein are also compounds, wherein Me is selected from the group consisting of Cr (chromium), Fe (iron), Mn (Manganese), Co (Cobalt) and Ru (Ruthenium).

Disclosed herein are also compounds, wherein M is selected from the group consisting of Cr(CO)₃, Mn(CO)₃, Co(CO)₂, Ru(CO)₂Cl⁺, Fe(CO)₂CN, Fe(cyclopentadienyl), Fe(1-acetyl-cyclopentadienyl), and Ru(1,4,7-Triazacyclononan)²⁺.

Disclosed herein are also compounds which have formula IV: 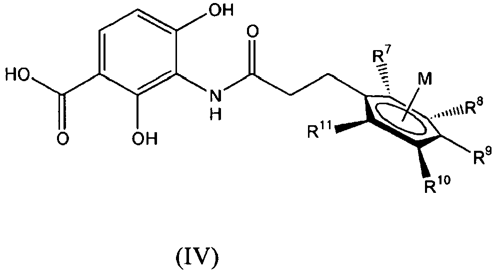 wherein:
R⁷, R⁸, R⁹, R¹⁰ and R¹¹ are independently selected from the group consisting of hydrogen, unsubstituted or substituted C₁-C₁₀ alkyl, unsubstituted or substituted C₁-C₁₀ alkenyl, unsubstituted or substituted C₁-C₁₀ alkynyl, unsubstituted or substituted C₃-C₈ cycloalkyl, unsubstituted or substituted C₁-C₁₀ alkoxy, unsubstituted or substituted C₃-C₈ cycloalkoxy, unsubstituted or substituted C₆-C₁₄ aryl, an unsubstituted or substituted 5- to 10-membered heteroaryl wherein 1 to 4 ring atoms are independently selected from nitrogen, oxygen or sulfur, an unsubstituted or substituted 5- to 10-membered heteroalicyclic ring wherein 1 to 3 ring atoms are independently nitrogen, oxygen or sulfur, -OR, -C(O)R, -C(O)OR , -C(O)NRR', -NRR', - S(O)₂R, -S(O)₂OR, and -S(O)₂NRR'; and
M, R and R' are as defined above.

Disclosed herein are also compounds having formula V: 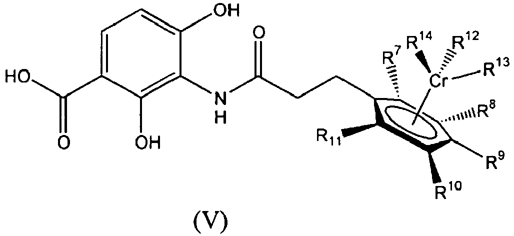 wherein:
R¹², R¹³ and R¹⁴ are independently selected from the group consisting of halo, carbonyl, C₁-C₁₀ alkyl and C₁-C₁₀ alkoxy and R⁷, R⁸, R⁹, R¹⁰ and R¹¹ are as defined above.

Described herein is also a compound having formula VI:

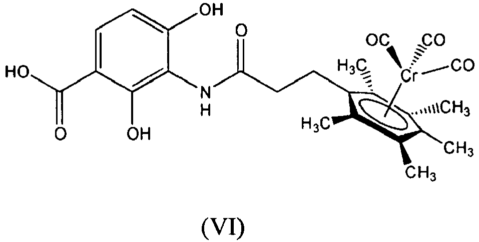

Further compounds disclosed herein are selected from the group consisting of formulae VII - XIII:

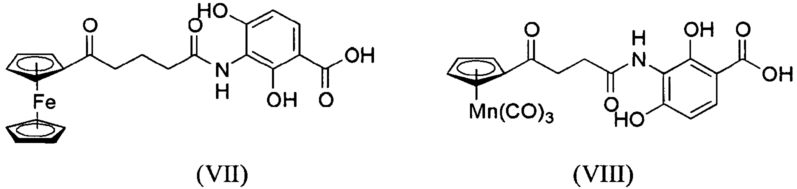

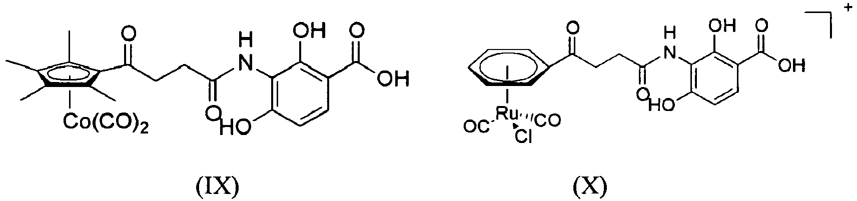

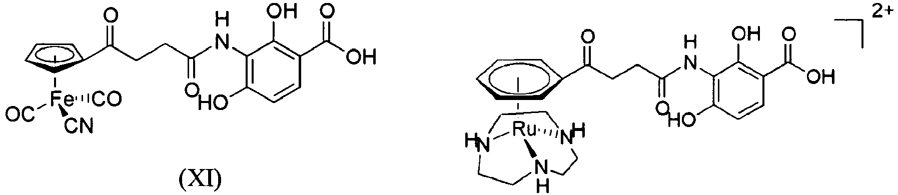

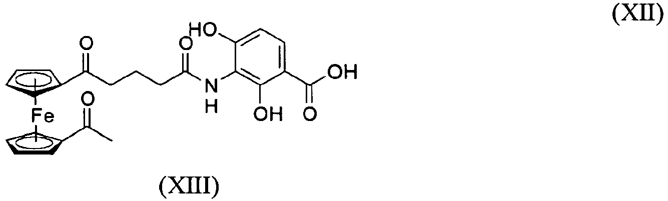

Disclosed herein are also pharmaceutical compositions comprising one or more of the above compounds or pharmaceutically acceptable salts or prodrugs thereof and a pharmaceutically acceptable carrier or excipient. Such pharmaceutical compositions can further comprise other pharmacologically active compounds, such as, for example, an antibiotic, an anti-cancer drug, an anti-diabetes drug, an anti-obesity drug, an anti-malarial drug, and an anti-fungal drug.

### Utility

The compounds described herein are useful as medicaments for the alleviation, prevention and/or treatment of microbial infections, for example bacterial or fungal infections, diabetes, obesity and obesity-related diseases and disorders, cancer, malaria and other apicomplexan protozoal diseases.

In one aspect, the disclosed herein are compounds for use as a medicament. In a further aspect, the above compounds are for use in the treatment and/or prevention of obesity, obesity-related diseases and disorders, cancer, diabetes, fungal infections, bacterial infections, malarial infections and other apicomplexan protozoal diseases.

Disclosed herein is also the use of one or more of the compounds described herein for the manufacture of a pharmaceutical for the alleviation, prevention and/or treatment of obesity, obesity-related diseases and disorders, cancer, diabetes, fungal infections, bacterial infections, malarial infections and other apicomplexan protozoal diseases. The use may comprise administering a therapeutically active amount of one or more of the compounds to a subject in need thereof.

In still another aspect, described herein is a method for the alleviation, prevention and/or treatment of obesity, obesity-related diseases and disorders, cancer, diabetes, fungal infections, bacterial infections, malarial infections and other apicomplexan protozoal diseases comprising administering to a subject in need thereof a therapeutically effective amount of one or more of the compounds disclosed herein.

### Administration and Pharmaceutical Composition

A compound described herein or a pharmaceutically acceptable salt thereof, can be administered as such to a human patient or can be administered in pharmaceutical compositions in which the foregoing materials are mixed with suitable carriers or excipient(s). Techniques for formulation and administration of drugs may be found in "Remington's Pharmacological Sciences," Mack Publishing Co., Easton, PA., latest edition.

As used herein, "administer" or "administration" refers to the delivery of a compound of formula (I) or a pharmaceutically acceptable salt thereof or of a pharmaceutical composition containing a compound of formula (I) or a pharmaceutically acceptable salt thereof to an organism for the purpose of prevention or treatment of a disease or disorder.

Suitable routes of administration may include, without limitation, oral, rectal, transmucosal or intestinal administration or intramuscular, subcutaneous, intramedullary, intrathecal, direct intraventricular, intravenous, intravitreal, intraperitoneal, intranasal, or intraocular injections. The preferred routes of administration are oral and parenteral.

Alternatively, one may administer the compound in a local rather than systemic manner, for example, via injection of the compound directly into a vessel, optionally in a depot or sustained release formulation.

Pharmaceutical compositions described herein may be manufactured by processes well known in the art, e. g., by means of conventional mixing, dissolving, granulating, drageemaking, levigating, emulsifying, encapsulating, entrapping or lyophilizing processes.

Pharmaceutical compositions for use in accordance with the present disclosure may be formulated in conventional manner using one or more physiologically acceptable carriers comprising excipients and auxiliaries which facilitate processing of the active compounds into preparations which can be used pharmaceutically. Proper formulation is dependent upon the route of administration chosen.

For injection, the compounds disclosed herein may be formulated in aqueous solutions, preferably in physiologically compatible buffers such as Hanks' solution, Ringer's solution, or physiological saline buffer. For transmucosal administration, penetrants appropriate to the barrier to be permeated are used in the formulation. Such penetrants are generally known in the art.

For oral administration, the compounds can be formulated by combining the active compounds with pharmaceutically acceptable carriers well known in the art. Such carriers enable the compounds of the invention to be formulated as tablets, pills, lozenges, dragees, capsules, liquids, gels, syrups, slurries, suspensions and the like, for oral ingestion by a patient. Pharmaceutical preparations for oral use can be made using a solid excipient, optionally grinding the resulting mixture, and processing the mixture of granules, after adding other suitable auxiliaries if desired, to obtain tablets or dragee cores. Useful excipients are, in particular, fillers such as sugars, including lactose, sucrose, mannitol, or sorbitol, cellulose preparations such as, for example, maize starch, wheat starch, rice starch and potato starch and other materials such as gelatine, gum tragacanth, methyl cellulose, hydroxypropylmethyl-cellulose, sodium carboxymethylcellulose, and/or polyvinylpyrrolidone (PVP). If desired, disintegrating agents may be added, such as cross-linked polyvinyl pyrrolidone, agar, or alginic acid. A salt such as sodium alginate may also be used.

Dragee cores are provided with suitable coatings. For this purpose, concentrated sugar solutions may be used which may optionally contain gum arabic, talc, polyvinyl pyrrolidone, carbopol gel, polyethylene glycol, and/or titanium dioxide, lacquer solutions, and suitable organic solvents or solvent mixtures. Dyestuffs or pigments may be added to the tablets or dragee coatings for identification or to characterize different combinations of active compound doses.

Pharmaceutical compositions which can be used orally include push-fit capsules made of gelatine, as well as soft, sealed capsules made of gelatine and a plasticizer, such as glycerol or sorbitol. The push-fit capsules can contain the active ingredients in admixture with a filler such as lactose, a binder such as starch, and/or a lubricant such as talc or magnesium stearate and, optionally, stabilizers. In soft capsules, the active compounds may be dissolved or suspended in suitable liquids, such as fatty oils, liquid paraffin, or liquid polyethylene glycols. Stabilizers may also be added to these formulations.

The compounds may also be formulated for parenteral administration, e. g., by bolus injection or continuous infusion. Formulations for injection may be presented in unit dosage form, e. g., in ampoules or in multi-dose containers, with an added preservative. The compositions may take such forms as suspensions, solutions or emulsions in oily or aqueous vehicles, and may contain formulating materials such as suspending, stabilizing and/or dispersing agents.

Pharmaceutical compositions for parenteral administration include aqueous solutions of a water soluble form, such as, without limitation, a salt, of the active compound.

Additionally, suspensions of the active compounds may be prepared in a lipophilic vehicle. Suitable lipophilic vehicles include fatty oils such as sesame oil, synthetic fatty acid esters such as ethyl oleate and triglycerides, or materials such as liposomes. Aqueous injection suspensions may contain substances which increase the viscosity of the suspension, such as sodium carboxymethyl cellulose, sorbitol, or dextran. Optionally, the suspension may also contain suitable stabilizers and/or agents that increase the solubility of the compounds to allow for the preparation of highly concentrated solutions.

Alternatively, the active ingredient may be in powder form for constitution with a suitable vehicle, e. g., sterile, pyrogen-free water, before use.

The compounds may also be formulated in rectal compositions such as suppositories or retention enemas, using, e. g., conventional suppository bases such as cocoa butter or other glycerides.

In addition to the formulations described previously, the compounds may also be formulated as depot preparations. Such long acting formulations may be administered by implantation (for example, subcutaneously or intramuscularly) or by intramuscular injection. A compound may be formulated for this route of administration with suitable polymeric or hydrophobic materials (for instance, in an emulsion with a pharmacologically acceptable oil), with ion exchange resins, or as a sparingly soluble derivative such as, without limitation, a sparingly soluble salt.

A non-limiting example of a pharmaceutical carrier for the hydrophobic compounds described herein is a cosolvent system comprising benzyl alcohol, a nonpolar surfactant, a water-miscible organic polymer and an aqueous phase such as the VPD co-solvent system. VPD is a solution of 3% w/v benzyl alcohol,8% w/v of the nonpolar surfactant Polysorbate 80, and 65% w/v polyethylene glycol 300, made up to volume in absolute ethanol. The VPD co-solvent system (VPD: D5W) consists of VPD diluted 1: 1 with a 5% dextrose in water solution. This cosolvent system dissolves hydrophobic compounds well, and itself produces low toxicity upon systemic administration.

Naturally, the proportions of such a co-solvent system may be varied considerably without destroying its solubility and toxicity characteristics. Furthermore, the identity of the co-solvent components may be varied: for example, other lowtoxicity nonpolar surfactants may be used instead of Polysorbate 80, the fraction size of polyethylene glycol may be varied, other biocompatible polymers may replace polyethylene glycol, e.g., polyvinyl pyrrolidone, and other sugars or polysaccharides may substitute for dextrose.

Alternatively, other delivery systems for hydrophobic pharmaceutical compounds may be employed. Liposomes and emulsions are well known examples of delivery vehicles or carriers for hydrophobic drugs. In addition, certain organic solvents such as dimethylsulfoxide also may be employed, although often at the cost of greater toxicity.

Additionally, the compounds may be delivered using a sustained-release system, such as semipermeable matrices of solid hydrophobic polymers containing the therapeutic agent.

Various sustained-release materials have been established and are well known by those skilled in the art. Sustained-release capsules may, depending on their chemical nature, release the compounds for a few weeks up to over 100 days. Depending on the chemical nature and the biological stability of the therapeutic reagent, additional strategies for stabilization may be employed.

The pharmaceutical compositions herein also may comprise suitable solid or gel phase carriers or excipients. Examples of such carriers or excipients include, but are not limited to, calcium carbonate, calcium phosphate, various sugars, starch, cellulose derivatives, gelatine, and polymers such as polyethylene glycols.

Many of the compounds described herein may be provided as physiologically acceptable salts wherein the claimed compound may form the negatively or the positively charged species. Examples of salts in which the compound forms the positively charged moiety include, without limitation, the sodium, potassium, calcium and magnesium salts formed by the reaction of a carboxylic acid or sulfonic acid group in the compound with an appropriate base (e.g. sodium hydroxide (NaOH), potassium hydroxide (KOH), Calcium hydroxide (Ca(OH)₂), etc.).

Pharmaceutical compositions suitable for use as disclosed herein include compositions wherein the active ingredients are contained in an amount sufficient to achieve the intended purpose, e. g., the treatment or prevention of a disease or disorder.

More specifically, a therapeutically effective amount means an amount of compound effective to prevent, alleviate or ameliorate symptoms of disease or prolong the survival of the subject being treated.

Determination of a therapeutically effective amount is well within the capability of those skilled in the art, especially in light of the detailed disclosure provided herein.

For any compound used in the methods of the invention, the therapeutically effective amount or dose can be estimated initially from cell culture assays. Then, the dosage can be formulated for use in animal models so as to achieve a circulating concentration range that includes the IC₅₀ as determined in cell culture. Such information can then be used to more accurately determine useful doses in humans.

Toxicity and therapeutic efficacy of the compounds described herein can be determined by standard pharmaceutical procedures in cell cultures or experimental animals, e.g., by determining the IC₅₀ and the LD₅₀ for a subject compound. The data obtained from these cell culture assays and animal studies can be used in formulating a range of dosage for use in humans. The dosage may vary depending upon the dosage form employed and the route of administration utilized. The exact formulation, route of administration and dosage can be chosen by the individual physician in view of the patient's condition.

Dosage amount and interval may be adjusted individually to provide plasma levels of the active species which are sufficient to maintain the therapeutic effects. These plasma levels are referred to as minimal effective concentrations (MECs). The MEC will vary for each compound but can be estimated from in vitro data, e. g., the concentration necessary to achieve 50-90% inhibition of a cellular target protein.

Dosages necessary to achieve the MEC will depend on individual characteristics and route of administration. HPLC assays or bioassays can be used to determine plasma concentrations.

Dosage intervals can also be determined using MEC value.

Compounds should be administered using a regimen that maintains plasma levels above the MEC for 10-90% of the time, preferably between 30-90% and most preferably between 50-90%.

In cases of local administration or selective uptake, the effective local concentration of the drug may not be related to plasma concentration and other procedures known in the art may be employed to determine the correct dosage amount and interval.

The amount of a composition administered will, of course, be dependent on the subject being treated, the severity of the affliction, the manner of administration, the judgment of the prescribing physician, etc.

The compositions may, if desired, be presented in a pack or dispenser device, such as a kit approved by a regulatory authority, such as EMEA or FDA, which may contain one or more unit dosage forms containing the active ingredient. The pack may for example comprise metal or plastic foil, such as a blister pack. The pack or dispenser device may be accompanied by instructions for administration.

The pack or dispenser may also be accompanied by a notice associated with the container in a form prescribed by a governmental agency regulating the manufacture, use or sale of pharmaceuticals, which notice is reflective of approval by the agency of the form of the compositions or of human or veterinary administration. Compositions comprising a compound of the invention formulated in a compatible pharmaceutical carrier may also be prepared, placed in an appropriate container, and labeled for treatment of an indicated condition.

In another aspect, a compound described herein, or its salt or prodrug, might be combined with other agents for the treatment of the diseases and disorders discussed above.

### Synthesis

In another aspect, disclosed herein is a method for the preparation of a compound of formula I, including reacting an aryl having the Formula IX 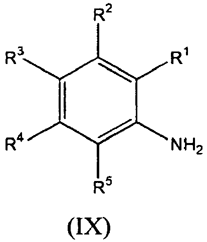 wherein:
R¹, R², R³, R⁴ and R⁵ are independently selected from the group consisting of hydrogen, unsubstituted or substituted C₁-C₁₀ alkyl, unsubstituted or substituted C₁-C₁₀ alkenyl, unsubstituted or substituted C₁-C₁₀ alkynyl, unsubstituted or substituted C₃-C₈ cycloalkyl, unsubstituted or substituted C₁-C₁₀ alkoxy, unsubstituted or substituted C₃-C₈ cycloalkoxy, unsubstituted or substituted C₆-C₁₄ aryl, an unsubstituted or substituted 5- to 10-membered heteroaryl wherein 1 to 4 ring atoms are independently selected from nitrogen, oxygen or sulfur, an unsubstituted or substituted 5- to 10-membered heteroalicyclic ring wherein 1 to 3 ring atoms are independently nitrogen, oxygen or sulfur, -OR, -C(O)R , -C(O)OR , -C(O)NRR', -NRR', - S(O)₂R -S(O)₂OR, and -S(O)₂NRR' and each of R¹, R², R³, R⁴ and R⁵ may be protected by a protecting group; and
R and R' are independently selected from the group consisting of hydrogen, unsubstituted C₁-C₄alkyl, and C₁-C₄ alkyl substituted with C₁-C₄ alkoxy;
with an aryl or heteroaryl having the formula X 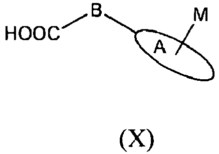 wherein:
B is selected from the group consisting of unsubstituted or substituted C₁-C₁₀ alkyl, unsubstituted or substituted C₁-C₁₀ alkenyl, unsubstituted or substituted C₁-C₁₀ alkynyl or unsubstituted or substituted C₁-C₁₀ alkoxy;
A is selected from the group consisting of unsubstituted or substituted cyclopentadienyl, unsubstituted or substituted C₄-C₁₄ aryl, an unsubstituted or substituted 5- to 10-membered heteroaryl wherein 1 to 4 ring atoms are independently selected from nitrogen, oxygen or sulfur, unsubstituted or substituted C₃-C₂₀ cycloalkyl and an unsubstituted or substituted 3- to 16-membered heteroalicyclic ring wherein 1 to 4 ring atoms are independently selected from nitrogen, oxygen or sulfur; and
M is a moiety of the formula Me(X)ₘ,
   wherein:
   Me is a metal selected from the group consisting of Ti, Zr, Hf, V, Nb, Ta, Cr, Mo, W, Mn, Tc, Re, Fe, Ru, Os, Co, Rh, Ir, Ni, Pd and Pt;
   each X is independently selected from the group consisting of azido, cyano, isocyano, thiocyanato, isothiocyanato, nitroso, dimethylsulfoxido, halo, carbonyl, unsubstituted or substituted C₁-C₁₀ alkyl, unsubstituted or substituted C₁-C₁₀ alkoxy, cyclopentadienyl, unsubstituted or substituted C₄-C₁₄ aryl, an unsubstituted or substituted 5- to 14-membered heteroaryl wherein 1 to 4 ring atoms are independently selected from nitrogen, oxygen or sulfur, unsubstituted or substituted C₃-C₁₆ cycloalkyl and an unsubstituted or substituted 3- to 16-membered heteroalicyclic ring wherein 1 to 4 ring atoms are independently selected from nitrogen, oxygen or sulfur; and
   m is an integer from 1 to 6.

In specific embodiments of these methods, B is C₁-C₄ alkyl.

In further embodiments R¹ and R⁵ are independently selected from hydrogen and -OR; R² is -C(O)OR; and/or R³, R⁴ and R⁵ are hydrogen. R is as defined above and, in a specific embodiment, is hydrogen.

In one embodiment, A is selected from the group consisting of unsubstituted or substituted C₄-C₁₄ aryl. In preferred embodiments, A is unsubstituted or substituted C₅-C₁₄ aryl, such as unsubstituted or substituted phenyl or unsubstituted or substituted cyclopentadienyl. When substituted the substituent may be selected from the group consisting of unsubstituted or substituted C₁-C₁₀ alkyl, unsubstituted or substituted C₁-C₁₀ alkenyl, unsubstituted or substituted C₁-C₁₀ alkynyl, unsubstituted or substituted C₃-C₈ cycloalkyl, unsubstituted or substituted C₁-C₁₀ alkoxy, unsubstituted or substituted C₃-C₈ cycloalkoxy, unsubstituted or substituted C₆-C₁₄ aryl, an unsubstituted or substituted 5- to 10-membered heteroaryl wherein 1 to 4 ring atoms are independently selected from nitrogen, oxygen or sulfur, an unsubstituted or substituted 5- to 10-membered heteroalicyclic ring wherein 1 to 3 ring atoms are independently nitrogen, oxygen or sulfur, -OR, -C(O)R , -C(O)OR , -C(O)NRR', -NRR', - S(O)₂R -S(O)₂OR and -S(O)₂NRR', with R and R' being as defined above. Preferred substituents for A are C₁-C₄ alkyl, C₁-C₄ alkoxy, halo and C(O)R, such as methyl, ethyl, OMe, OEt, C(O)Me, C(O)Et and Cl.

Described herein are also compounds, wherein X is selected from the group consisting of C₄-C₁₄ aryl, C₄-C₁₄ heteroaryl, C₄-C₁₄ heterocycloalkyl and C₄-C₁₄ cycloalkyl. X may, for example, be selected from the group consisting of cyclopentadienyl, benzene, 1,4,7-triazacyclononan, carbonyl, halo and cyano.

In one embodiment, Me is selected from the group consisting of Cr, Fe, Mn, Co and Ru.

In specific embodiments, M is selected from the group consisting of Cr(CO)₃, Mn(CO)₃, Co(CO)₂, Ru(CO)₂Cl⁺, Fe(CO)₂CN, Fe(cyclopentadienyl), Fe(1-acetyl-cyclopentadienyl), and Ru(1,4,7-Triazacyclononan)²⁺.

In one specific embodiment, the inventors of the present invention have synthesized an organometallic platensimycin analogue wherein the synthetically challenging tetracyclic entity of platensimycin has been replaced by a pentamethyl-benzene-chromium-tricarbonyl moiety (Figure 1).

### Examples

The present inventions will be explained in more detail in the following examples. However, the examples are only used for illustration and do not limit the scope of the present invention.

**Materials.** All chemicals were of reagent grade quality or better, obtained from commercial suppliers and used without further purification. Solvents were used as received or dried over 4 Å molecular sieves. All preparations were carried out using standard Schlenk techniques.

**Instrumentation and methods.** ¹H and ¹³C NMR spectra were recorded in deuterated solvents on Bruker DRX 200, 250, 400 or 600 spectrometers at 30°C. The chemical shifts, δ , are reported in ppm (parts per million). The residual solvent peaks have been used as an internal reference. The abbreviations for the peak multiplicities are as follows: s (singlet), d (doublet), dd (doublet of doublets), t (triplet), q (quartet), m (multiplet) and br (broad). Infrared spectra were recorded on an ATR unit using a Bruker Tensor 27 FTIR spectrophotometer at 4 cm⁻¹ resolution. Signal intensity is abbreviated br (broad), s (strong), m (medium), and w (weak). ESI mass spectra were recorded on a Bruker Esquire 6000. Crystallographic data for 5 (Figur 2) were collected using a Bruker-axs SMART 1000 CCD diffractometer. The structure was solved by direct methods (SHELXS-97 (G. M. Sheldrick, in SHELXS-97, Program for Solution of Crystal Structures, University of Göttingen (Germany), 1997) and refined against *F*² with all measured reflections (SHELXL-97 (G. M. Sheldrick, supra); Palton-Squeeze (A. L. Spek, Acta Crystallogr., Sect. A: Found. Crystallogr. 1990, 46, C34)).

### Example 1: Synthetic procedures

**Synthesis of the compounds.** The synthesis of the tested compounds was carried out according to the following reaction schemes (Scheme 1 and 2).

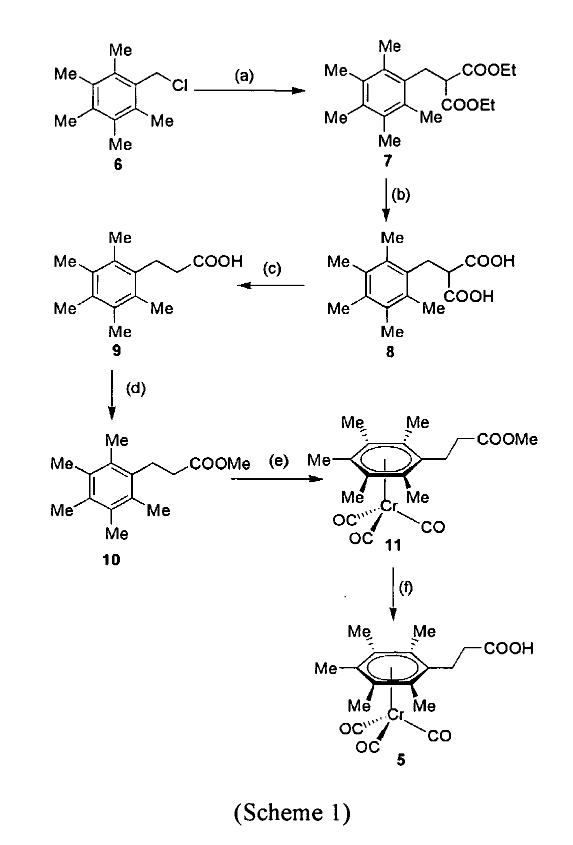

Scheme 1 illustrates the synthesis of the intermediate 5 (3-(chromiumtricarbonyl-pentamethylphenyl)-propionic acid). Reagents and conditions: (a) 6 (1.0 equiv), DEM (1.0 equiv), K₂CO₃ (25.0 equiv), CH₃CN, 75°C, 50h, 98%; (b) 7 (1.0 equiv), NaOH (15.0 equiv), EtOH, 75°C, 50 h, 90%; (c) 8 (1.0 equiv), 185°C, 1 h, 84%; (d) 9 (1.0 equiv), MeOH, HCl, 65°C, 12 h, 86%; (e) 10 (1.0 equiv), Cr(CO)₆ (1.2 equiv), Bu₂O:THF (10:1), 140°C, 50h, 93%; (f) 11 (1.0 equiv), KOH (21.0 equiv), MeOH:H₂O (1:2), 25°C, 15 h, 95%. DEM = CH₂(CO₂Et)₂

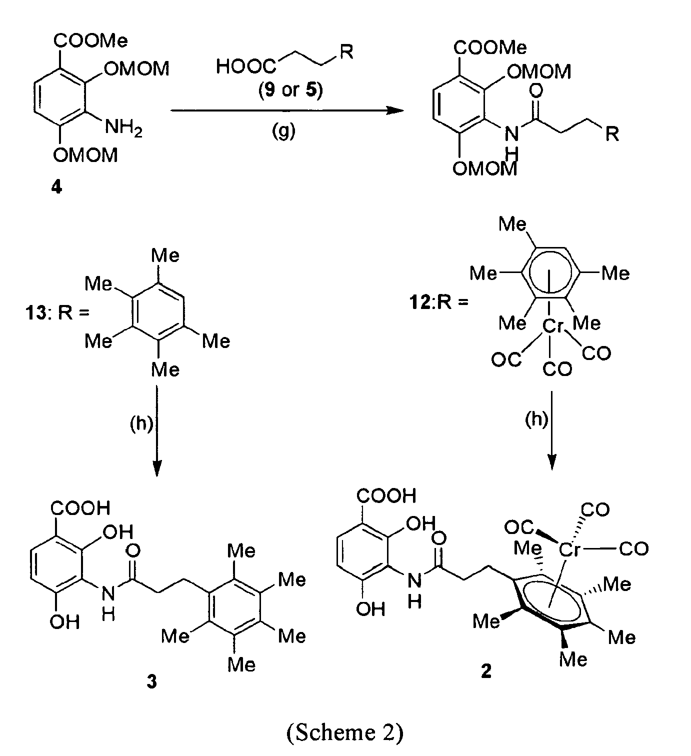

Scheme 2 shows the HATU mediated amide bond formation followed by ester hydrolysis and MOM deprotection. Reagents and conditions: (g) **9 or 5 (1.0 eq**uiv), **4** (1.5 equiv), HATU (3.0 equiv), NEt₃ (3.0 equiv), DMF, 25°C, 40 h, 53% **(**12) and 80% (13); (h) **12** or 13 (1.0 equiv), LiOH.H₂O (50.0 equiv), THF:H₂O (4:1), 45°C, 16 h; then 4N HCl in dioxin, 25°C, 0.5 h, 60% (2) and 87% (3). MOM = methoxy methyl

For the synthesis of pentamethyl-benzene-Cr-tricarbonyl analogue of platensimycin **(2),** the protected amine **4** and the carboxylic acid **5** containing the moiety were required (Scheme 1 and 2). The protected aromatic amine **4** was synthesized from 2, 4-dihydroxy methyl benzoate following the procedure described earlier (P. Heretsch, A. Giannis, Synthesis 2007, 2614; K. C. Nicolaou, A. Li, D. J. Edmonds, Angew. Chem. Int. Ed. 2006, 45, 7086). The carboxylic acid **5** was synthesized starting from pentamethyl benzyl chlorine **6** via pentamethylphenyl propionate **10** in six steps (Scheme 1). Treatment of **6** with diethyl melonate (DEM) in the presence of K₂CO₃ gave 7 in 98% yield. The ¹H NMR spectrum of 7 showed a multiplet at 3.44 ppm for the α-hydrogen atom along with a triplet at 1.12 ppm and a quartet at 4.04 ppm corresponding to the protons of the ethyl ester group. Ester hydrolysis with ethanolic NaOH solution provided **8** in good yield. The absence of the proton signals at 1.12 ppm and 4.04 ppm in the ¹H NMR spectrum of **8** confirms the formation of **8**. Decarboxylation of **8** followed by esterification with MeOH/HCl gave **10.** The presence of the expected compound **10** was confirmed by ¹H NMR spectroscopy with the -OMe protons appearing at 3.7 ppm as a singlet. The metalation proceeded smoothly by heating a mixture of **10** and chromiun hexacarbonyl to obtain **11** in 92% yield following a similar procedure described by Gibson *et al* (S. E. Gibson, M. H. Smith, Org. Biomol. Chem. 2003, 1, 676). Formation of **11** was confirmed by the signal in ¹³C NMR spectroscopy at 238 ppm corresponding to Cr-*C*O and by IR spectroscopy with two strong stretching bands at 1929 and 1837 cm⁻¹ respectively corresponding to the metal tricarbonyl group. **11** was saponified using 15% KOH solution to provide carboxylic acid **5** (95% yield) (I. Lavastre, J. Besancon, P. Brossiert, C. Moise, Appl. Organomet. Chem. 1990, 4, 9).

The carboxylic acids **5** and **9** were then coupled with the amine **4** using similar reaction conditions as those described by Nicolaou *et al*. (K. C. Nicolaou, A. Li, D. J. Edmonds, Angew. Chem. Int. Ed. 2006, 45, 7086) to provide **12** (53% yield) and **13** (80% yield) respectively (Scheme 2). ¹H NMR spectrum of **12** showed two distinct doublets in the aromatic region and four singlets from the MOM protecting groups along with the signals of five CH₃ from the pentamethyl benzene ring. The deprotection reaction for **12** was initially carried out (aqueous LiOH, THF, then aqueous HCl) following the procedure described by Nicolaou *et al*. (supra), but did not yield the desired product **2. 3** along with some decomposed products were obtained (confirmed by TLC, IR and ESI-MS). After hydrolyzing the methyl ester as before, treatment of the dry reaction mixture with 4N HCl in dioxane yielded the desired platensimycin analogue **2** in 60% yield. ¹H NMR spectroscopy confirmed unambiguously the presence of **2** with the absence of the signals from the MOM and -OMe groups. A similar procedure was followed to obtain **3** from **13** (87% yield).

Single crystals of compound **5** were grown from acetone at -78°C and the ORTEP plot is shown in Figure 2 (Crystallographic data of **5:** C₁₇H₂₀CrO₅, M = 356.33; monoclinic, *P2₁*/*n, a* = 8.037(4), *b* = 15.733(8), *c* = 13.713(7), *b =* 105.01(1), *V* = 1675(1) Å³, *Z* = 4, *2Qₘₐ* = 50, 26, *R₁* = 0.0502 for 2370 observed (*I>2s1*) reflections and *wR2* = 0.1438 for all 2959 reflections, *GOF =* 1.107, 212 parameters. CCDC 713538 contains the supplementary crystallographic data for this paper. These data can be obtained free of charge from The Cambridge Crystallographic Data Centre via www.ccdc.cam.ac.ukldata_request/cif). As expected for carboxylic acids, **5** forms a dimer in the solid state. The crystallographic data matches quite well with similar type of structures reported earlier (D. Rene, J. Gerard, Bull. Sac. Chim. Fr. 1974, 7-8, 1639). Also, single crystals of compound **12** could be grown from acetonitrile at 0°C.

### Compound 7:

The procedure for the preparation of this compound has been reported Aitken *et al*., but no spectroscopic characterization data are available (R. R. Aitken, G. M. Badger, J. W. Cook, J. Chem. Soc. 1950, 331). In order to achieve better yield the following modified procedure was used. To a solution of diethyl malonate (0.76 mL, 5 mmol) and K₂CO₃ (1.65 g, 12.5 mmol) in dry acetonitrile (40 mL) a solution of 1-chloromethyl-2,3,4,5,6-pentamethyl-benzene (0.98 g, 5 mmol) in dry acetonitrile (15 mL) was added under an argon atmosphere. The resulting mixture was refluxed for 55 h. The reaction mixture was cooled to room temperature and evaporated to dryness. The solid residue was dissolved in ethyl acetate, filtered and the solution was evaporated under vacuum to obtain **7** as a white powder (1.58 g, 98 %). The product was used for the next step without further purification. *R* _{f} = 0.55 (silica gel, hexanes:EtOAc 2:1 ); ¹H NMR (400 MHz, CDCl₃): δ (ppm): 1.12 (t, 6H, ³J = 7.13 Hz, 2CH₃ of the ester), 2.12 (s, 6H, 2-meta CH₃), 2.14 (s, 3H, para CH₃), 2.17 (s, 6H, 2 ortho CH₃), 3.33 (m, 2H, Ph-CH₂), 3.44 (m, 1H, CH), 4.07 (q, 4H, ³J = 7.11 Hz, 2CH₂ of the ester); ¹³C NMR (400 MHz, CDCl₃): δ (ppm): 13.9, 16.8, 16.9 (2 CH₃ attach to benzene ring), 29.1, 52.4, 61.3, 132.3, 132.6, 133.1, 133.7, 169.8 (C=O); IR bands(v): 3020w, 2936w, 1742s (CO), 1727s (CO), 1464m, 1407m, 1391m, 1366m, 1344m, 1325m, 1301m, 1284m, 1220s, 1174s, 1150s, 1095m, 1063m, 1025m, 1004s, 859m, 777m cm⁻¹; EI-MS: *m*/*z* (%): 320.2 (25) [M]⁺, 302.2 (20) [M-H₂O]⁺, 161.1 (100) [M-C₇H₁₁O₄]⁺.

### Compound 8:

The procedure for the preparation of this compound has been reported, but no spectroscopic characterization data are available (Aitken et al., supra). In order to achieve better yield the following modified procedure was followed. To a solution of ester (3.79 g, 11.84 mmol) in ethanol (150 mL) solid NaOH was added (7.10 g, 177.6 mmol). The reaction mixture was refluxed for 20 h under an argon atmosphere. The resulting suspension was concentrated under reduced pressure to obtain a white solid, which was dissolved in water (150 mL) and washed with ethylacetate (to remove the organic impurities). The resulting solution was acidified with 1N HCl and extracted with EtOAc (3 × 30 mL). The organic layers were dried over anhydrous Na₂SO₄, filtered and evaporated to dryness to obtain compound **8** in pure form as a white solid (2.81 g, 90 %). *R_{f}* = 0.21 (silica gel, EtOAc:MeOH 10:1 ); ¹H NMR (250 MHz, MeOD): δ (ppm): 2.12 (s, 9H, 3CH₃), 2.18 (s, 6H, 2CH₃), 3.11 (d, 2H, CH₂), 3.41-3.47(m, 1H, CH); ¹³C NMR (250 MHz, MeOD): δ (ppm): 18.5, 18.5, 18.6, 31.9, 55.2, 134.5, 134.6, 134.9, 135.4, 174.6 (C=O); IR bands(v): 2917w, 1702s, 1426m, 1381w, 1330w, 1291m, 1281m, 1174m, 1661w, 1025w, 934m, 795w, 680w cm⁻¹; EI-MS: *m*/*z* (%): 264 (3.5) [M]⁺, 220 (32) [M-CO₂]⁺, 202 (14) [M-H₂O- CO₂]⁺, 161 (100) [M-C₃H₃O₄]⁺.

### Compound 9:

β-pentamethylphenylpropionic acid was obtained by following the procedure as described in the literature (Aitken et al., supra). As the spectroscopic characterization data for this compound are not available, they are provided herein. *R*_{f} = 0.5 (silica gel, hexanes:EtOAc 1:1 ); ¹H NMR (200 MHz, CDCl₃): δ (ppm): 2.16 (s, 6H, 2 ortho CH₃), 2.20 (s, 9H, 2 meta and1 para CH₃), 2.38-2.47 (m, 2H, CH₂), 2.95-3.04 (m, 2H, CH₂); ¹³C NMR (200 MHz, CDCl₃): δ (ppm): 16.7, 1.2, 17.3, 26.2, 34.5, 132.1, 133.2, 133.7, 134.2, 180.1 (C=O); IR bands(v): 2920 m, 2702 w, 2550 w, 2359w, 2342 w, 2323 w, 2272 w, 2162 w, 2112 w, 2049 w, 1979 w, 1698 s(C=O), 1428 m,1355 m, 1309 m, 1246 w, 1210 s, 1059 w, 1045 w, 997 w, 945 m, 820 w, 742 w, 690 w, 617w cm⁻¹; EI-MS: *m*/*z* (%): 220 (46) [M]⁺, 161 (100) [M-C₂H₃O₂]⁺, 147 (42) [M-C₃H₅O₂]⁺.

### Compound 10:

The acid 9 (0.794 g, 2.87 mmol) was heated under reflux for 48 h with 150 mL of anhydrous methanol saturated with HCl. The reaction was followed by TLC. After complete disappearance of starting material the solvent (mainly MeOH) was removed by rotary evaporator. The residue was dissolved in 150 mL water and the product was extracted with ethyl acetate (3 × 30 mL).The combined organic part was washed with a K₂CO₃ solution and then distilled water and finally dried over anhydrous Na₂SO₄. Removal of the solvent yields **10** as light brown powder (0.727 g, 86 %). *R*_{f} = 0.65 (silica gel, hexanes:EtOAc 2:1 ); ¹H NMR (200 MHz, CDCl₃): δ (ppm): 2.19 (s, 6H, 2 ortho CH₃), 2.15 (s, 9H, 2 meta and 1 para CH₃), 2.41-2.33 (m, 2H, CH₂), 3.01-2.92 (m, 2H, CH₂), 3.70 (s, 3H, OMe); ¹³C NMR (200 MHz, CDCl₃): δ (ppm) 16.7, 17.2, 17.3, 26.5, 34.4, 52.0, 132.1, 133.1, 133.5, 134.5, 174.0 (C=O); IR bands(v): 3004m, 2958w, 2856w, 2728w, 2599w, 2162w, 2111w, 2021w, 1725s (C=O), 1444m, 1373w, 1337m, 1286s, 1264s, 1167m, 1090m, 1050s, 1013s, 865m, 800s, 748m, 661w, 640w, 608m cm⁻¹; EI-MS: *m*/*z* (%): 233.8 (10) [M]⁺, 219.8 (35) [M-CH₂]⁺, 160.9 (100) [M-C₃H₅O₂]⁺.

### Compound 11:

The compound was prepared following the procedure described by S. E. Gibson *et al*. (S. E. Gibson, M. H. Smith, Org. Biomol. Chem. 2003, 1, 676) with the exception that 1.2 equivalents of Cr(CO)₆ were used instead of 1.09 equivalents. The product is obtained in pure form as a yellow solid (yield: 93 %). *R*_{f} = 0.73 (silica gel, hexanes:EtOAc 1:1); ¹H NMR(250 MHz, CDCl₃): δ (ppm): 2.13 (s, 6H, 2 ortho CH₃), 2.18 (s, 9H, 2 meta and1 para CH₃), 2.36-2.45 (m, 2H, CH₂), 3.79-2.92 (m, 2H, CH₂), 3.65(s, 3H, OCH₃) ppm; ¹³C NMR (250 MHz, CDCl₃): δ (ppm): 16.4, 16.9, 17.08, 26.8, 34.6, 51.9, 105.6, 106.6, 107.7, 107.8, 175.1 (COOMe), 237.8 (Cr-C=O) ppm; IR bands(v): 2926w, 2360w, 1929s/1837s (C=O attach to Cr), 1733s (C=O of ester), 1420m, 1383m, 1364m, 1298m, 1257m, 1186m, 1165m, 1071w, 981m, 892m, 819w, 803m, 761w, 727w, 674s, 637s, 609w cm⁻¹; ESI-MS (+Ve): *m*/*z* (%): 393.02 (100) [M+Na]⁺, 408.99 (86) [M+K]⁺, 381.26 (60) [M+K-CO]⁺.

### Compound 5:

The ester hydrolysis reaction was carried out by following the procedure described by Lavastre *et al*. with the only difference lying in that the water and methanol were degassed thoroughly before use (I. Lavastre, J. Besancon, P. Brossiert, C. Moise, Appl. Organomet. Chem. 1990, 4, 9). The processing was done differently. After completion of the reaction methanol was evaporated and water was added. The mixture was then acidified using 1N HCl to pH 2 and the yellow precipitate formed was extracted immediately using ethyl acetate. The organic part was dried over anhydrous Na₂SO₄ and removal of solvent yields the pure acid 5 as a yellow solid (Yield: 95%). *R*_{f}= 0.45 (silica gel, hexanes:EtOAc 1:1 ); ¹H NMR (250 MHz, CD₃OD): δ (ppm): 2.13 (s, 6H, 2 ortho CH₃), 2.18 (s, 9H, 2 meta and 1 para CH₃), 2.34-2.42 (m, 2H, CH₂), 2.78-2.86 (m, 2H, CH₂); ¹³C NMR (250 MHz, Acetone-d6): δ (ppm): 18.6, 19.1, 19.2, 28.8, 36.5, 109.5, 110.3, 111.1, 112.0, 175.7 (COOH), 238.3 (Cr-C=O); IR bands(v): 2961w, 2923m, 2854w, 1936s/1853s (C=O attach to Cr), 1702s (C=O of acid), 1432w, 1414w, 1356w, 1308s, 1259m, 1211w, 1089s, 1015w, 754s, 651w, 621m, 610m cm⁻¹; ESI-MS(-Ve): *m*/*z* (%): 355.02 (100) [M-H]⁻.

### Compound 12:

To a stirred solution of the carboxylic acid **5** (534 mg, 1.5mmol) in 25 mL de-oxygenated DMF, HATU (1.70 g, 4.5 mmol) and NEt₃ (454 mg, 4.5 mmol) were added and the mixture was stirred for 30 min under an argon atmosphere. Amine 4 (612 mg, 2.25 mmol) was then added and the mixture stirred for 40 h at room temperature. The volume of DMF was then reduced to ∼10 mL by evaporation under vacuum, 100 mL saturated brine were added and the mixture was extracted using ethyl acetate (3 × 30 mL). The organic layer was washed with distilled water (3 x 40 mL), brine (1 × 50 mL) and dried over anhydrous Na₂SO₄. Removal of the solvent yields a yellow semi-solid. Flash column chromatography (silica gel, hexanes:EtOAc 1:1.5) afforded a yellow solid. The solid obtained was washed with ice-cooled diethyl ether (2 × 30 mL) to give the desired compound 12 in pure form as a yellow powder (484.2 mg, 53%). *R*_{f} = 0.23 (silica gel, hexanes:EtOAc 1:1.5 ); ¹H NMR (600MHz, CDCl₃): δ (ppm) 2.10, 2.14 (Min), 2.23, 2.29, 2.32 (maj) (rotamers, 15H, 3CH₃), 2.63 and 3.02 (maj), 2.85 (min), (rotamers, br, s, 2H, 2CH₂), 3.55 and 3.57 (maj), 3.50 and 3.62 (min) (rotamers, s, 3H, 2 OCH₃), 3.89 (s, 3H, OCH₃), 5.09, 5.29 (s,2H, 20-CH₂), 7.07 (d, 1H, ring proton), 7.84 (maj), 7.90 (min) (rotamers, d, 1H, ring proton ), 7.60 (maj), 6.86 (min) (rotamers, s, 1H, NH); ¹³C NMR (600 MHz, CDCl₃): δ (ppm): 16.3 (min) and 16.8, 17.0, 17.2 (maj), (rotamers, CH₃), 25.9 (min) and 26.3 (maj) ( rotamers, CH₂), 33.6 (min) and 37.7 (maj) (rotamers, CH₂) 52.2 (maj) and 52.3 (min) (rotamers, CO-OMe), 56.6 (maj) and 56.9 (min) (rotamers, CH₂-OMe), 57.2 (maj) and 57.7 (min) (rotamers, CH₂-OMe), 94.7 (O-CH₂-OMe), 101.8 (maj) and 102.0 (min) (rotamers, O-CH₂-OMe), 105.3, 107.2, 108.0, 108.9 (benzene ring C containing Cr(CO)₃), 110.5 (min) and 111.0 (maj), 117.5 (maj) and 117.8 (min), 121.4 (maj) and 121.7 (min), 130.7 (maj) and 132.2 (min), 154.3 (maj) and 155.9 (min), 156.6 (maj) and 157.0 (min) (rotamers, six benzene ring carbon) 165.0 (min) and 165.3 (maj) (rotamers, NH-CO), 169.2 (maj) and 174.0 (min) (rotamers, -CO-OMe), 235.2 (Cr-C=O); IR bands(v) : 1937s and 1850s(Cr-C=O),1706m (-CO-OMe), 1646m (NH-CO), 1599s, 1553s, 1433s,1391s, 1291m, 1289s, 1200m, 1090s, 1050m, 893s, 785s,732s, 675m, 636m, cm⁻¹; ESI-MS (+Ve): *m*/*z* (%): 632.13 (100) [M+Na]⁺, 496.21 (70) [M+Na-Cr-3CO]⁺.

### Compound 13:

For the preparation of compound **13,** the reaction conditions were similar to those used for the preparation of amide **12** with the exception that the solvent used for extraction is CH₂Cl₂. Flash column chromatography (silica gel, first hexanes:EtOAc 2:1 and then 1:1) gives 13 (yield 80%). *R*_{f} = 0.46 (silica gel, hexanes:EtOAc 1:1.5); ¹H NMR (400 MHz, CDCl₃): δ (ppm): 2.10-2.18 (m, br, 15H, 5 CH₃), 2.12-2.48 (m, brs, 2H, CH₂), 2.90-3.21 (m, br, 2H, CH₂), 3.39 (s, 3H, O-CH₃), 3.45 (s, 3H, O-CH₃), 3.85 (s, 3H, CO-CH₃), 5.01 (s, 2H, O-CH₂), 5.25 (s, 2H, O-CH₂), 6.89 (d, 1H, benzene ring proton), 7.30-7.45 (s, br, 1H, NH), 7.85 (d, 1H, benzene ring proton); ¹³C NMR (400 MHz, CDCl₃): δ (ppm): 16.6, 17.1, 17.3, 52.4, 57.1, 57.7, 95.36, 102.0, 111.1, 118.7, 122.3, 130.9, 132.1, 133.1, 133.4, 135.0, 154.7, 157.3, 165.6(NHCO), 171.0(COOMe); IR bands(v): 3248w, 2906w, 1728s, 1661s, 1599m, 1531m, 1479m, 1485w, 1432m, 1397m, 1272s, 1190m,1143s, 1083w, 1055s, 980m, 962w, 921w, 827w, 721w cm⁻¹; ESI-MS(+Ve): *mlz* (%): 496.18 (100) [M+Na]⁺.

### Compound 2:

To a stirred solution of 12 (950 mg, 1.56 mmol) in 40 mL of THF/H₂O (THF:H₂O 4:1), which was thoroughly degassed, LiOH·H₂O (3.2 g, 78 mmol) was added under an argon atmosphere. The mixture was heated to 45°C for 16h. The reaction mixture was then evaporated to dryness under vacuum and degassed 4N HCl was added to a pH of about zero and the resulting reaction mixture was stirred for 30 minutes. Then 100 mL brine were added and the mixture extracted with diethyl ether (3 × 30 mL). The combined organic phases were washed with distilled water (5 × 50 mL), brine (2 × 25 mL) and dried over anhydrous Na₂SO₄. Removal of the solvent yielded a yellow solid. Flash column chromatography (silica gel, first EtOAc and then EtOAc:MeOH:AcOH 20:1:0.1) yielded compound 2 (474 mg, 60%). *R*_{f} = 0.37 (silica gel, hexanes:EtOAc:MeOH 20:1:0.5); ¹H NMR (400 MHz, Pyridine-d₅): δ (ppm): 1.97 (s, 6H, 2CH₃), 2.04 (s, 3H, 1CH₃), 2.15 (s, 6H, 2CH₃), 2.91-3.05 (m, br, 2H, CH₂), 3.16-3.29 (m, br, 2H, CH₂), 6.84 (d, 1H, benzene ring proton), 8.09 (d, 1H, benzene ring proton), 9.86 (s, br, 1H, NH), 10.74 (s, 1H, OH); ¹³C NMR (250 MHz, Pyridine-d₅): δ (ppm): 19.0, 19.3, 19.5, 30.0, 39.5, 109.3, 109.9, 110.6, 111.0, 112.0, 112.5, 117.3, 132.5, 161.6, 161.8, 175.0 (NHCO), 177.4 (COOH), 238.8 (Cr-C=O); IR bands(v): 3370w, 2928w (br), 2361w, 1860s, 1920s, 1665m, 1632m, 1605m, 1548m, 1382m, 1244m, 1152m, 1063m, 783s cm⁻¹; ESI-MS(-Ve): *m*/*z* (%): 506.05 (100) [M-H]⁻.

### Compound 3:

The experimental procedure was similar to that described above for compound 2. Flash column chromatography (silica gel, first EtOAc and then EtOAc:MeOH:AcOH 20:1:0.2) yielded compound 3 (yield 87%). *R*_{f} = 0.28 (silica gel, hexanes:EtOAc:MeOH 20:1:0.2 ); ¹H NMR (400 MHz, (CD₃)₂SO): δ (ppm): 2.15(s, 9H, 3CH₃), 2.23 (s, 6H, 2CH₃), 2.42 (t, 2H, ³J=7.92, CH₂), 2.93 (t, 2H, ³J=7.92 CH₂), 6.47 (d, 1H, benzene ring proton), 7.59 (d, 1H, benzene ring proton), 9.11 (s, 1H, NH), 10.20 (s, br, 1H, OH); ¹³C NMR (400 MHz, (CD₃)₂SO): δ (ppm): 16.6, 17.4 (3 CH₃), 27.0, 35.9, 105.4, 108.5, 113.8, 129.7, 131.7, 132.5, 132.7, 135.3, 159.6, 159.8, 172.2 (NHCO), 172.8(COOH); IR bands(v): 3322w, 2914w, 1650s, 1632s, 1588m, 1538s, 1456w, 1424m, 1373w, 1314m, 1257s, 1229m, 1189w, 1158w, 1064w, 982w, 824w, 985m, 683m cm⁻¹; ESI-MS(-Ve): m/z (%): 370.01 (100) [M-H]⁻.

### Example 2: Biological assays

MICs for *Bacillus subtilis* 168 and *Escherichia coli* W3110 were determined in test tubes containing 2.5 mL of Luria Broth medium and appropriate compound concentrations up to 200 µg/mL. The tubes were inoculated with 10⁵ cells/mL and incubated at 37°C for 18 h. The MIC was defined as the lowest concentration that inhibited visible growth. The results of these experiments are shown in Table 1.

**Table 1. Minimum inhibitory concentration values (µg/mL and µmol/mL) of platensimycin analogues and some Cr-salts against B. subtilis and E. coli.**

| Compounds | MIC*_{B.subtilis}* | | MIC*_{E.coli}* | |
|---|---|---|---|---|
| | (µg/mL) | (µmol/mL) | (µg/mL) | (µmol/mL) |
| platensimycin | 0.2 | 0.0005 | >88 | >0.20 |
| 2 | 80 | 0.15 | >200 | >0.40 |
| 3 | 100 | 0.27 | >200 | >0.54 |
| 5 | 180 | 0.50 | >200 | >0.56 |
| Cr(NO₃)₃ | >200 | >0.84 | >200 | >0.84 |
| K₂Cr₂O₇ | 200 | 0.68 | >200 | >0.68 |
| Na₂CrO₄ | 200 | 1.24 | >200 | >1.24 |

No inhibition of *E. coli* growth was observed for any of the compounds up to 200 µg/mL. The purely organic compound 3 inhibits *B. subtilis* growth at an MIC of 100 µg/mL (0.27 µmol/mL). Interestingly, the MIC value of the organometallic platensimycin analogue **2** against *B. subtilis* is 80 µg/mL (0.15 µmol/mL). Hence, putting the Cr(CO)₃ moiety into the organic frame work **3** increases the activity against *B. subtilis* of approximately twofold (MIC, from 0.27 µmol/mL to 0.15 µmol/ml). Some Cr salts (in III and VI oxidation state) as well as the carboxylic acid **5** were also tested to check the intrinsic toxicity of Cr (see Table 1). No activity was observed against *E. coli. B. subtilis* growth was not inhibited by 200 µg/mL of Cr(NO₃)₃ and only weakly inhibited at 200 µg/mL of K₂Cr₂O₇ or Na₂CrO₄, excluding Cr toxicity as the sole or main mechanism of action. These experiments confirm that the chromium pentamethylbenzene tricarbonyl unit is a reasonably close analogue of the tetracyclic ring system of platensimycin and that metal-containing platensimycin analogues in general are useful as antibacterial agents.

## Claims

1. A compound of formula II: 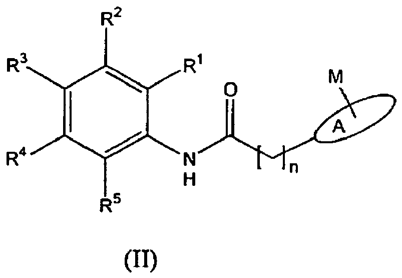 wherein:
n is an integer from 1 to 4;
R¹ and R⁵ are independently selected from hydrogen and -OR;
R² is -C(O)OR;
R³ and R⁴ are hydrogen;
A is selected from the group consisting of unsubstituted or substituted cyclopentadienyl, unsubstituted or substituted C₄-C₁₄ aryl, an unsubstituted or substituted 5- to 10-membered heteroaryl wherein 1 to 4 ring atoms are independently selected from nitrogen, oxygen or sulfur, unsubstituted or substituted C₃-C₂₀ cycloalkyl and an unsubstituted or substituted 3- to 16-membered heteroalicyclic ring wherein 1 to 4 ring atoms are independently selected from nitrogen, oxygen or sulfur; and
M is a moiety of the formula Me(X)ₘ,
wherein:
Me is a metal selected from the group consisting of Ti, Zr, Hf, V, Nb, Ta, Cr, Mo, W, Mn, Tc, Re, Fe, Ru, Os, Co, Rh, Ir, Ni, Pd and Pt;
each X is independently selected from the group consisting of azido, cyano, isocyano, thiocyanato, isothiocyanato, nitroso, dimethylsulfoxido, halo, carbonyl, unsubstituted or substituted C₁-C₁₀ alkyl, unsubstituted or substituted C₁-C₁₀ alkoxy, cyclopentadienyl, unsubstituted or substituted C₄-C₁₄ aryl, an unsubstituted or substituted 5- to 14-membered heteroaryl wherein 1 to 4 ring atoms are independently selected from nitrogen, oxygen or sulfur, unsubstituted or substituted C₃-C₁₆ cycloalkyl and an unsubstituted or substituted 3- to 16-membered heteroalicyclic ring wherein 1 to 4 ring atoms are independently selected from nitrogen, oxygen or sulfur; and
m is an integer from 1 to 6;
R is selected from the group consisting of hydrogen, unsubstituted C₁-C₄ alkyl, and C₁-C₄ alkyl substituted with C₁-C₄ alkoxy;
or a pharmaceutically acceptable salt thereof

2. The compound of claim 1, wherein the compound has formula III 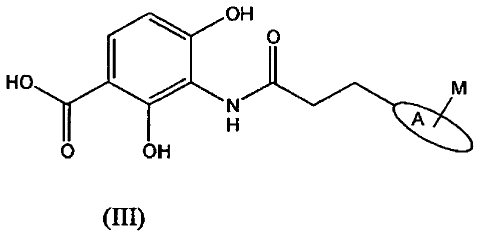 wherein:
A and M are defined as in claim 1.

3. The compound of any one of claims 1-2, wherein A is unsubstituted or substituted C₅-C₁₄ aryl.

4. The compound of any one of claims 1-3, wherein X is selected from the group consisting of unsubstituted or substituted C₄-C₁₄ aryl, unsubstituted or substituted C₄-C₁₄ heteroaryl, unsubstituted or substituted C₄-C₁₄ heterocycloalkyl and unsubstituted or substituted C₄-C₁₄ cycloalkyl, carbonyl, halo and cyano.

5. The compound of any one of claims 1-4, wherein Me is selected from the group consisting of Cr, Fe, Mn, Co and Ru.

6. The compound of any one of claims 1-5, wherein M is selected from the group consisting of Cr(CO)₃, Mn(CO)₃, Co(CO)₂, Ru(CO)₂Cl⁺, Fe(CO)₂CN, Fe(cyclopentadienyl), Fe(1-acetyl-cyclopentadienyl), and Ru(1,4,7-Triazacyclononan)²⁺.

7. The compound of any one of claims 1-6, wherein the compound has formula IV: 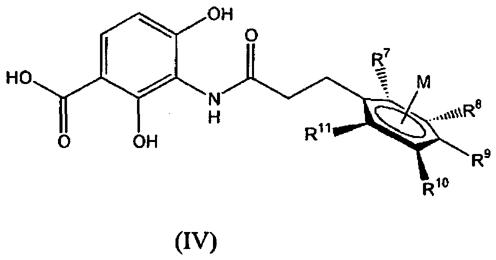 wherein:
R⁷, R⁸, R⁹, R¹⁰ and R¹¹ are independently selected from the group consisting of hydrogen, unsubstituted or substituted C₁-C₁₀ alkyl, unsubstituted or substituted C₁-C₁₀ alkenyl, unsubstituted or substituted C₁-C₁₀ alkynyl, unsubstituted or substituted C₃-C₈ cycloalkyl, unsubstituted or substituted C₁-C₁₀ alkoxy, unsubstituted or substituted C₃-C₈ cycloalkoxy, unsubstituted or substituted C₆-C₁₄ aryl, an unsubstituted or substituted 5- to 10-membered heteroaryl wherein 1 to 4 ring atoms are independently selected from nitrogen, oxygen or sulfur, an unsubstituted or substituted 5- to 10-membered heteroalicyclic ring wherein 1 to 3 ring atoms are independently nitrogen, oxygen or sulfur, -OR, -C(O)R , -C(O)OR , -C(O)NRR', -NRR', - S(O)₂R, -S(O)₂OR, and -S(O)₂NRR'; and
M, R and R' are defined as in claim 1.

8. The compound of any one of claims 1-7, wherein the compound has formula V: 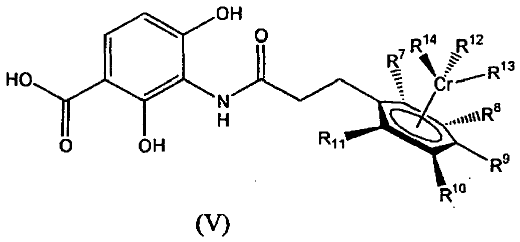 wherein:
R¹² , R¹³ and R¹⁴ are independently selected from the group consisting of halo, carbonyl, C₁-C₁₀ alkyl and C₁-C₁₀ alkoxy.

9. The compound of claim 1, wherein the compound has one of the following formulae:

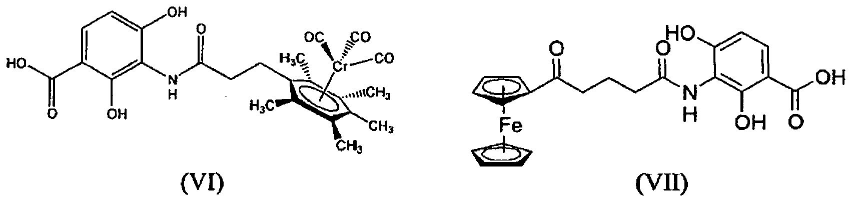

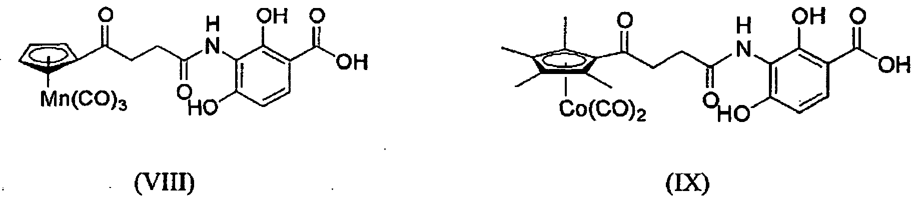

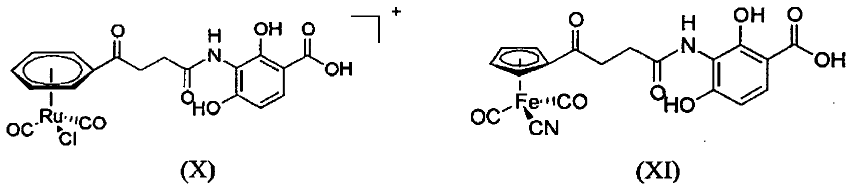

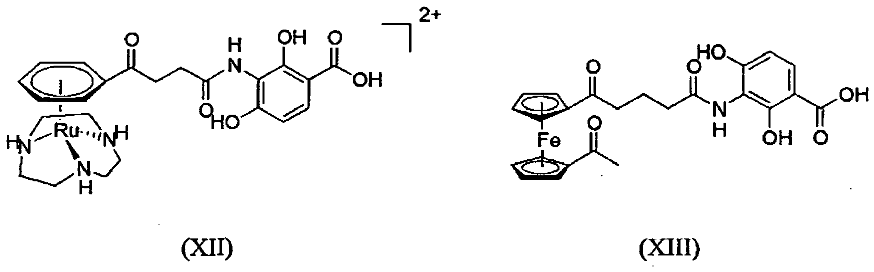

10. A pharmaceutical composition comprising a compound or salt of any one of claims 1 to 6 and a pharmaceutically acceptable carrier or excipient.

11. The pharmaceutical composition of claim 10, further comprising one or more additional pharmacologically active substance(s).

12. Use of a compound according to any one of claims 1 to 9 or a pharmaceutical composition according to claim 10 or 11 for the manufacture of a pharmaceutical for the treatment or prevention of obesity, obesity-related diseases and disorders, cancer, diabetes, fungal infections, bacterial infections, malarial infections and other apicomplexan protozoal diseases in a subject in need thereof.

13. Method for the preparation of a compound according to any one of claims 1 to 9, wherein the method comprises reacting an aryl having the Formula IX 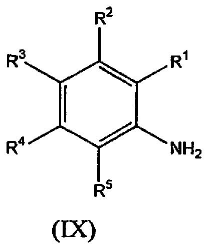 wherein:
R¹ and R⁵ are independently selected from hydrogen and -OR;
R² is -C(O)OR;
R³ and R⁴ are hydrogen; and each of R¹, R², R³, R⁴ and R⁵ may be protected by a protecting group; and
R is selected from the group consisting of hydrogen, unsubstituted C₁-C₄ alkyl, and C₁-C₄ alkyl substituted with C₁-C₄ alkoxy;
with an aryl or heteroaryl having the formula X 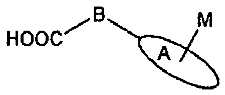 wherein:
B is selected from the group consisting of unsubstituted C₁-C₄ alkylyl;
A is selected from the group consisting of unsubstituted or substituted cyclopentadienyl, unsubstituted or substituted C₄-C₁₄ aryl, an unsubstituted or substituted 5- to 14-membered heteroaryl wherein 1 to 4 ring atoms are independently selected from nitrogen, oxygen or sulfur, unsubstituted or substituted C₃-C₁₆ cycloalkyl and an unsubstituted or substituted 3- to 16-membered heteroalicyclic ring wherein 1 to 4 ring atoms are independently selected from nitrogen, oxygen or sulfur; and
M is a moiety of the formula Me(X)ₘ,
wherein:
Me is a metal selected from the group consisting of Ti, Zr, Hf, V, Nb, Ta, Cr, Mo, W, Mn, Tc, Re, Fe, Ru, Os, Co, Rh, Ir, Ni, Pd and Pt;
each X is independently selected from the group consisting of azido, cyano, isocyano, thiocyanato, isothiocyanato, nitroso, dimethylsulfoxido, halo, carbonyl, unsubstituted or substituted C₁-C₁₀ alkyl, unsubstituted or substituted C₁-C₁₀ alkoxy, cyclopentadienyl, unsubstituted or substituted C₄-C₁₄ aryl, an unsubstituted or substituted 5- to 10-membered heteroaryl wherein 1 to 4 ring atoms are independently selected from nitrogen, oxygen or sulfur, unsubstituted or substituted C₃-C₂₀ cycloalkyl and an unsubstituted or substituted 3- to 16-membered heteroalicyclic ring wherein 1 to 4 ring atoms are independently selected from nitrogen, oxygen or sulfur; and
m is an integer from 1 to 6.

## Patentansprüche

1. Eine Verbindung der Formel II: 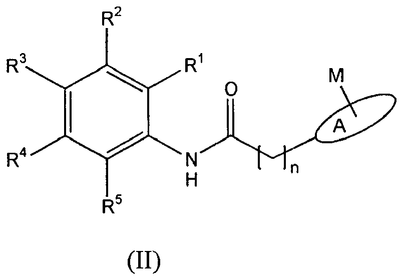 wobei:
n eine ganze Zahl von 1 bis 4 ist;
R¹ und R⁵ unabhängig voneinander aus Wasserstoff und -OR ausgewählt sind;
R² -C(O)OR ist;
R³ und R⁴ Wasserstoff sind;
A aus der Gruppe bestehend aus unsubstitutiertem oder substitutiertem Cyclopentadienyl, unsubstitutiertem oder substitutiertem C₄-C₁₄ Aryl, einem unsubstitutierten oder substitutierten 5- bis 10-gliedrigen Heteroaryl, wobei 1 bis 4 Ringatome unabhängig voneinander aus Stickstoff, Sauerstoff oder Schwefel ausgewählt sind, unsubstitutiertem oder substitutiertem C₃-C₂₀ Cycloalkyl und einem unsubstitutierten oder substitutierten 3- bis 16-gliedrigen heteroalicyclischen Ring, wobei 1 bis 4 Ringatome unabhängig voneinander aus Stickstoff, Sauerstoff oder Schwefel ausgewählt sind, ausgewählt ist; und
M ein Rest der Formel Me(X)ₘ ist,
wobei:
Me ein Metal ist, das aus der Gruppe bestehend aus Ti, Zr, Hf, V, Nb, Ta, Cr, Mo, W, Mn, Tc, Re, Fe, Ru, Os, Co, Rh, Ir, Ni, Pd und Pt ausgewählt ist;
jedes X unabhängig voneinander aus der Gruppe bestehend aus Azido, Cyano, Isocyano, Thiocyanato, Isothiocyanato, Nitroso, Dimethylsulfoxido, Halo, Carbonyl, unsubstitutiertem oder substitutiertem C₁-C₁₀ Alkyl, unsubstitutiertem oder substitutiertem C₁-C₁₀ Alkoxy, Cyclopentadienyl, unsubstitutiertem oder substitutiertem C₄-C₁₄ Aryl, einem unsubstitutierten oder substitutierten 5- bis 14-gliedrigen Heteroaryl, wobei 1 bis 4 Ringatome unabhängig voneinander aus Stickstoff, Sauerstoff oder Schwefel ausgewählt sind, unsubstitutiertem oder substitutiertem C₃-C₁₆ Cycloalkyl und einem unsubstitutierten oder substitutierten 3- bis 16-gliedrigen heteroalicyclischen Ring, wobei 1 bis 4 Ringatome unabhängig voneinander aus Stickstoff, Sauerstoff oder Schwefel ausgewählt sind, ausgewählt ist; und
m eine ganze Zahl von 1 bis 6 ist;
R aus der Gruppe bestehend aus Wasserstoff, unsubstitutiertem C₁-C₄ Alkyl und C₁-C₄ Alkyl, das mit C₁-C₄ Alkoxy substituiert ist, ausgewählt ist;
oder ein pharmazeutisch annehmbares Salz davon.

2. Die Verbindung nach Anspruch 1, wobei die Verbindung die Formel III besitzt 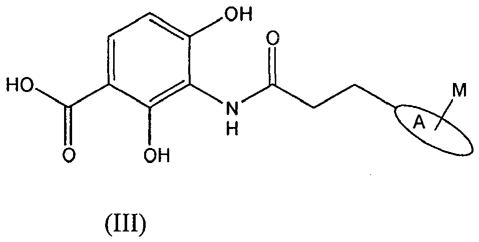 wobei:
A und M wie in Anspruch 1 definiert sind.

3. Die Verbindung nach einem der Ansprüche 1-2, wobei A unsubstitutiertes oder substitutiertes C₅-C₁₄ Aryl ist.

4. Die Verbindung nach einem der Ansprüche 1-3, wobei X aus der Gruppe bestehend aus unsubstitutiertem or substitutiertem C₄-C₁₄ Aryl, unsubstitutiertem oder substitutiertem C₄-C₁₄ Heteroaryl, unsubstitutiertem oder substitutiertem C₄-C₁₄ Heterocycloalkyl und unsubstitutiertem oder substitutiertem C₄-C₁₄ Cycloalkyl, Carbonyl, Halo und Cyano ausgewählt ist.

5. Die Verbindung nach einem der Ansprüche 1-4, wobei Me aus der Gruppe bestehend aus Cr, Fe, Mn, Co und Ru ausgewählt ist.

6. Die Verbindung nach einem der Ansprüche 1-5, wobei M aus der Gruppe bestehend aus Cr(CO)₃, Mn(CO)₃, Co(CO)₂, Ru(CO)₂Cl⁺, Fe(CO)₂CN, Fe(cyclopentadienyl), Fe(1-acetyl-cyclopentadienyl), und Ru(1,4,7-Triazacyclononan)²⁺ ausgewählt ist.

7. Die Verbindung nach einem der Ansprüche 1-6, wobei die Verbindung die Formel IV besitzt: 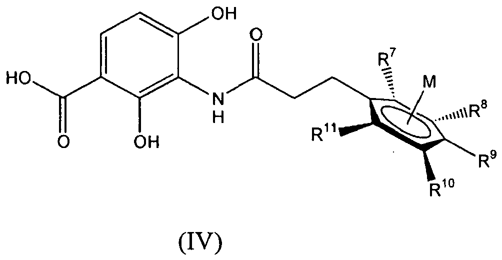 wobei:
R⁷, R⁸, R⁹, R¹⁰ und R¹¹ unabhängig voneinander aus der Gruppe bestehend aus Wasserstoff, unsubstitutiertem or substitutiertem C₁-C₁₀ Alkyl, unsubstitutiertem oder substitutiertem C₁-C₁₀ Alkenyl, unsubstitutiertem oder substitutiertem C₁-C₁₀ Alkynyl, unsubstitutiertem oder substitutiertem C₃-C₈ Cycloalkyl, unsubstitutiertem oder substitutiertem C₁-C₁₀ Alkoxy, unsubstitutiertem oder substitutiertem C₃-C₈ Cycloalkoxy, unsubstitutiertem oder substitutiertem C₆-C₁₄ Aryl, einem unsubstitutierten oder substitutierten 5- bis 10-gliedrigen Heteroaryl, wobei 1 bis 4 Ringatome unabhängig voneinander aus Stickstoff, Sauerstoff oder Schwefel ausgewählt sind, einem unsubstitutierten oder substitutierten 5- bis 10-gliedrigen heteroalicyclischen Ring, wobei 1 bis 3 Ringatome unabhängig voneinander aus Stickstoff, Sauerstoff oder Schwefel ausgewählt sind, -OR, -C(O)R , -C(O)OR , -C(O)NRR', -NRR', - S(O)₂R, -S(O)₂OR, und -S(O)₂NRR' ausgewählt sind; und
M, R und R' wie in Anspruch 1 definiert sind.

8. Die Verbindung nach einem der Ansprüche 1-7, wobei die Verbindung die Formel V besitzt: 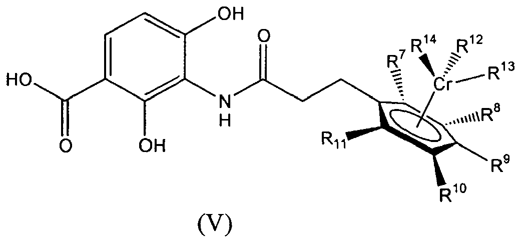 wobei:
R¹², R¹³ und R¹⁴ unabhängig voneinander aus der Gruppe bestehend aus Halo, Carbonyl, C₁-C₁₀Alkyl und C₁-C₁₀Alkoxy ausgewählt sind.

9. Die Verbindung nach Anspruch 1, wobei die Verbindung eine der folgenden Formeln besitzt:

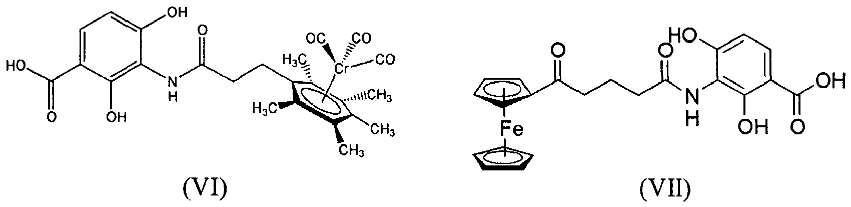

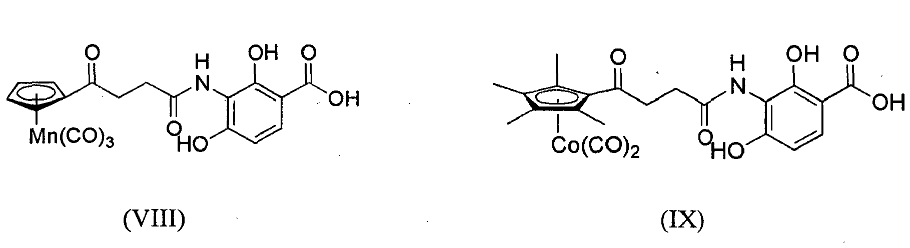

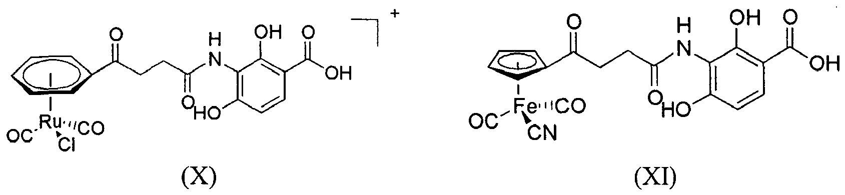

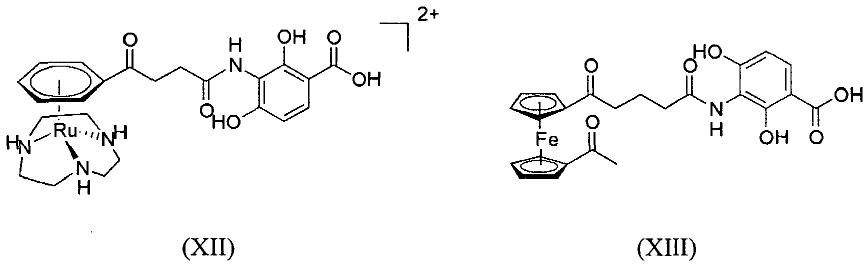

10. Eine pharmazeutische Zusammensetzung umfassend eine Verbindung oder ein Salz nach einem der Ansprüche 1-6 und einen pharmazeutisch annehmbaren Träger oder Hilfsstoff.

11. Die pharmazeutische Zusammensetzung nach Anspruch 10, ferner umfassend eine oder mehrere zusätzliche pharmakologisch aktive Substanzen.

12. Verwendung einer Verbindung nach einem der Ansprüche 1-9 oder einer pharmazeutischen Zusammensetzung nach Anspruch 10 oder 11 zur Herstellung eines Arzneimittels zur Behandlung von Adipositas, mit Adipositas in Verbindung stehenden Krankheiten und Störungen, Krebs, Diabetes, Pilzinfektionen, bakteriellen Infektionen, Malariainfektionen und anderen apicomplexischen, protozoischen Krankheiten in einem Subjekt, das eine solche Behandlung benötigt.

13. Verfahren zur Herstellung einer Verbindung nach einem der Ansprüche 1-9, wobei das Verfahren das Umsetzen eines Aryls, das die Formel IX besitzt, 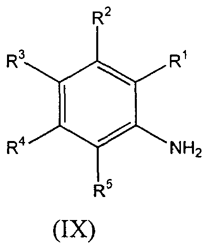 wobei:
R¹ und R⁵ unabhängig voneinander aus Wasserstoff und -OR ausgewählt sind;
R² -C(O)OR ist;
R³ und R⁴ Wasserstoff sind; und jedes von R¹, R², R³, R⁴ und R⁵ mit einer Schutzgruppe geschützt sein kann; und
R aus der Gruppe bestehend aus Wasserstoff, unsubstitutiertem C₁-C₄ Alkyl und C₁-C₄ Alkyl, das mit C₁-C₄ Alkoxy substituiert ist, ausgewählt ist;
mit einem Aryl oder Heteroaryl, das die Formel X besitzt, 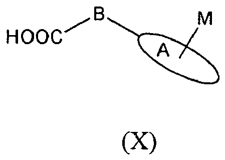 wobei:
B aus der Gruppe bestehend aus unsubstitutiertem C₁-C₄ Alkylyl ausgewählt ist;
A aus der Gruppe bestehend aus unsubstitutiertem oder substitutiertem Cyclopentadienyl, unsubstitutiertem oder substitutiertem C₄-C₁₄ Aryl, einem unsubstitutierten oder substitutierten 5- bis 10-gliedrigen Heteroaryl, wobei 1 bis 4 Ringatome unabhängig voneinander aus Stickstoff, Sauerstoff oder Schwefel ausgewählt sind, unsubstitutiertem oder substitutiertem C₃-C₂₀ Cycloalkyl und einem unsubstitutierten oder substitutierten 3- bis 16-gliedrigen heteroalicyclischen Ring, wobei 1 bis 4 Ringatome unabhängig voneinander aus Stickstoff, Sauerstoff oder Schwefel ausgewählt sind, ausgewählt ist;
M ein Rest der Formel Me(X)ₘ ist,
wobei:
Me ein Metal ist, das aus der Gruppe bestehend aus Ti, Zr, Hf, V, Nb, Ta, Cr, Mo, W, Mn, Tc, Re, Fe, Ru, Os, Co, Rh, Ir, Ni, Pd und Pt ausgewählt ist;
jedes X unabhängig voneinander aus der Gruppe bestehend aus Azido, Cyano, Isocyano, Thiocyanato, Isothiocyanato, Nitroso, Dimethylsulfoxido, Halo, Carbonyl, unsubstitutiertem oder substitutiertem C₁-C₁₀ Alkyl, unsubstitutiertem oder substitutiertem C₁-C₁₀ Alkoxy, Cyclopentadienyl, unsubstitutiertem oder substitutiertem C₄-C₁₄ Aryl, einem unsubstitutierten oder substitutierten 5- bis 14-gliedrigen Heteroaryl, wobei 1 bis 4 Ringatome unabhängig voneinander aus Stickstoff, Sauerstoff oder Schwefel ausgewählt sind, unsubstitutiertem oder substitutiertem C₃-C₁₆ Cycloalkyl und einem unsubstitutierten oder substitutierten 3- bis 16-gliedrigen heteroalicyclischen Ring, wobei 1 bis 4 Ringatome unabhängig voneinander aus Stickstoff, Sauerstoff oder Schwefel ausgewählt sind, ausgewählt ist; und
m eine ganze Zahl von 1 bis 6 ist,
umfasst.

## Revendications

1. Composé de formule II : 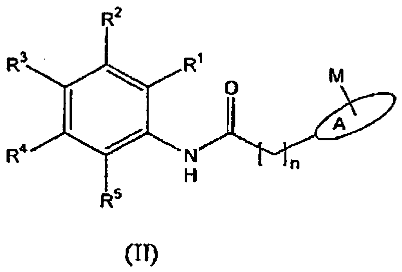 dans laquelle :
n est un nombre entier de 1 à 4 ;
R¹ et R⁵ sont choisis indépendamment parmi un atome d'hydrogène et un groupe -OR ;
R² représente un groupe -C(O)OR ;
R³ et R⁴ représentent un atome d'hydrogène ;
A est choisi dans le groupe constitué par les groupes cyclopentadiényle non substitué ou substitué, aryle en C₄ à C₁₄ non substitué ou substitué, hétéroaryle de 5 à 10 chaînons non substitué ou substitué dans laquelle 1 à 4 atomes de cycle sont choisis indépendamment parmi l'azote, l'oxygène ou le soufre, cycloalkyle en C₃ à C₂₀ non substitué ou substitué et cycle hétéroalicyclique de 3 à 16 chaînons non substitué ou substitué dans laquelle 1 à 4 atomes de cycle sont choisis indépendamment parmi l'azote, l'oxygène ou le soufre ; et
M représente un radical de formule Me(X)ₘ,
dans laquelle :
Me représente un métal choisi dans le groupe constitué par Ti, Zr, Hf, V, Nb, Ta, Cr, Mo, W, Mn, Tc, Re, Fe, Ru, Os, Co, Rh, Ir, Ni, Pd et Pt ;
chaque X est choisi indépendamment dans le groupe constitué par les groupes azido, cyano, isocyano, thiocyanato, isothiocyanato, nitroso, diméthylsulfoxydo, halogéno, carbonyle, alkyle en C₁ à C₁₀ non substitué ou substitué, alcoxy en C₁ à C₁₀ non substitué ou substitué, cyclopentadiényle, aryle en C₄ à C₁₄ non substitué ou substitué, hétéroaryle de 5 à 14 chaînons non substitué ou substitué dans laquelle 1 à 4 atomes de cycle sont choisis indépendamment parmi l'azote, l'oxygène ou le soufre, cycloalkyle en C₃ à C₁₆ non substitué ou substitué et cycle hétéroalicyclique de 3 à 16 chaînons non substitué ou substitué **caractérisé en ce que** 1 à 4 atomes de cycle sont choisis indépendamment parmi l'azote, l'oxygène ou le soufre ; et
m est un nombre entier de 1 à 6 ;
R est choisi dans le groupe constitué par un atome d'hydrogène, les groupes alkyle en C₁ à C₄ non substitué et alkyle en C₁ à C₄ substitué par un groupe alcoxy en C₁ à C₄ ;
ou un sel pharmaceutiquement acceptable de celui-ci.

2. Composé selon la revendication 1, dans lequel le composé a la formule III 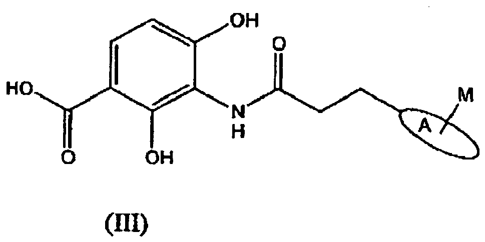 dans laquelle :
A et M sont définis comme dans la revendication 1.

3. Composé selon l'une quelconque des revendications 1 et 2, dans lequel A représente un groupe aryle en C₅ à C₁₄ non substitué ou substitué.

4. Composé selon l'une quelconque des revendications 1 à 3, dans lequel X est choisi dans le groupe constitué par les groupes aryle en C₄ à C₁₄ non substitué ou substitué, hétéroaryle en C₄ à C₁₄ non substitué ou substitué, hétérocycloalkyle en C₄ à C₁₄ non substitué ou substitué et cycloalkyle en C₄ à C₁₄ non substitué ou substitué, carbonyle, halogéno et cyano.

5. Composé selon l'une quelconque des revendications 1 à 4, dans lequel Me est choisi dans le groupe constitué par Cr, Fe, Mn, Co et Ru.

6. Composé selon l'une quelconque des revendications 1 à 5, dans lequel M est choisi dans le groupe constitué par Cr(CO)₃, Mn(CO)₃, Co(CO)₂, Ru(CO)₂Cl⁺, Fe(CO)₂CN, Fe(cyclopentadiényle), Fe(1-acétyl-cyclopentadiényle), et Ru(1,4,7-triazacyclononane)²⁺.

7. Composé selon l'une quelconque des revendications 1 à 6, dans lequel le composé a la formule IV : 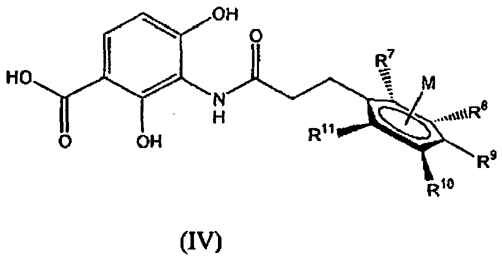 dans laquelle :
R⁷, R⁸, R⁹, R¹⁰ et R¹¹ sont choisis indépendamment dans le groupe constitué par un atome d'hydrogène, les groupes alkyle en C₁ à C₁₀ non substitué ou substitué, alcényle en C₁ à C₁₀ non substitué ou substitué, alcynyle en C₁ à C₁₀ non substitué ou substitué, cycloalkyle en C₃ à C₈ non substitué ou substitué, alcoxy en C₁ à C₁₀ non substitué ou substitué, cycloalcoxy en C₃ à C₈ non substitué ou substitué, aryle en C₆ à C₁₄ non substitué ou substitué, hétéroaryle de 5 à 10 chaînons non substitué ou substitué **caractérisé en ce que** 1 à 4 atomes de cycle sont choisis indépendamment parmi l'azote, l'oxygène ou le soufre, cycle hétéroalicyclique de 5 à 10 chaînons non substitué ou substitué dans laquelle 1 à 3 atomes de cycle représentent indépendamment l'azote, l'oxygène ou le soufre, -OR, -C(O)R, -C(O)OR, -C(O)NRR', -NRR', -S(O)₂R, -S(O)₂OR, et -S(O)₂NRR' ; et
M, R et R' sont définis comme dans la revendication 1.

8. Composé selon l'une quelconque des revendications 1 à 7, dans lequel le composé a la formule V : 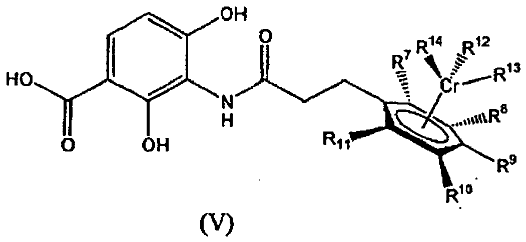 dans laquelle :
R¹², R¹³ et R¹⁴ sont choisis indépendamment dans le groupe constitué par les groupes halogéno, carbonyle, alkyle en C₁ à C₁₀ et alcoxy en C₁ à C₁₀.

9. Composé selon la revendication 1, dans lequel le composé a l'une des formules suivantes :

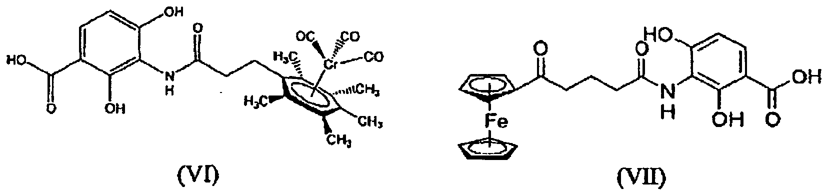

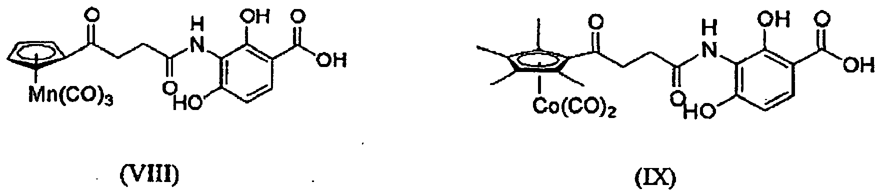

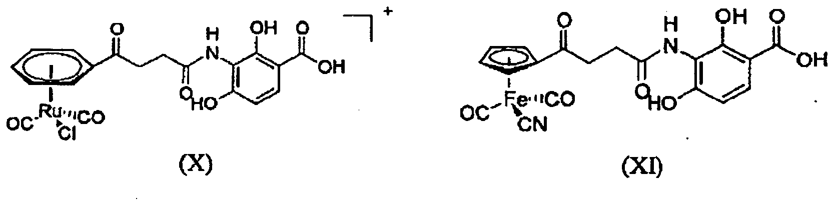

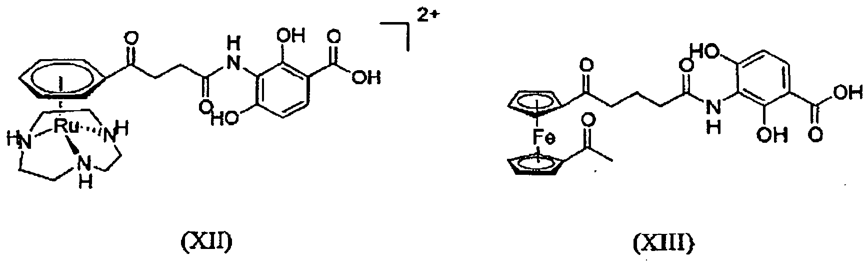

10. Composition pharmaceutique comprenant un composé ou un sel selon l'une quelconque des revendications 1 à 6, et un support ou un excipient pharmaceutiquement acceptable.

11. Composition pharmaceutique selon la revendication 10, comprenant en outre une ou plusieurs substances pharmacologiquement actives supplémentaires.

12. Utilisation d'un composé selon l'une quelconque des revendications 1 à 9, ou d'une composition pharmaceutique selon la revendication 10 ou 11, pour la fabrication d'un produit pharmaceutique destiné au traitement ou à la prévention de l'obésité, de maladies et de troubles associés à l'obésité, du cancer, du diabète, d'infections fongiques, d'infections bactériennes, d'infections paludéennes et d'autres maladies causées par des protozoaires apicomplexes chez un sujet en ayant besoin.

13. Procédé de préparation d'un composé selon l'une quelconque des revendications 1 à 9, dans lequel le procédé comprend la réaction d'un groupe aryle ayant la formule IX 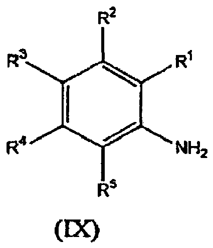 dans laquelle :
R¹ et R⁵ sont choisis indépendamment parmi un atome d'hydrogène et un groupe -OR ;
R² représente un groupe -C(O)OR ;
R³ et R⁴ représentent un atome d'hydrogène ; et chacun de R¹, R², R³, R⁴ et R⁵ peut être protégé par un groupe protecteur ; et
R est choisi dans le groupe constitué par un atome d'hydrogène, les groupes alkyle en C₁ à C₄ non substitué et alkyle en C₁ à C₄ substitué par un groupe alcoxy en C₁ à C₄ ;
avec un groupe aryle ou hétéroaryle ayant la formule X 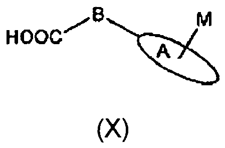
dans laquelle :
B est choisi dans le groupe constitué par un groupe alkylyle en C₁ à C₄ non substitué ;
A est choisi dans le groupe constitué par les groupes cyclopentadiényle non substitué ou substitué, aryle en C₄ à C₁₄ non substitué ou substitué, hétéroaryle de 5 à 14 chaînons non substitué ou substitué dans laquelle 1 à 4 atomes de cycle sont choisis indépendamment parmi l'azote, l'oxygène ou le soufre, cycloalkyle en C₃ à C₁₆ non substitué ou substitué et cycle hétéroalicyclique de 3 à 16 chaînons non substitué ou substitué dans laquelle 1 à 4 atomes de cycle sont choisis indépendamment parmi l'azote, l'oxygène ou le soufre ; et
M représente un radical de formule Me(X)ₘ,
dans laquelle :
Me représente un métal choisi dans le groupe constitué par Ti, Zr, Hf, V, Nb, Ta, Cr, Mo, W, Mn, Tc, Re, Fe, Ru, Os, Co, Rh, Ir, Ni, Pd et Pt ;
chaque X est choisi indépendamment dans le groupe constitué par les groupes azido, cyano, isocyano, thiocyanato, isothiocyanato, nitroso, diméthylsulfoxydo, halogéno, carbonyle, alkyle en C₁ à C₁₀ non substitué ou substitué, alcoxy en C₁ à C₁₀ non substitué ou substitué, cyclopentadiényle, aryle en C₄ à C₁₄ non substitué ou substitué, hétéroaryle de 5 à 10 chaînons non substitué ou substitués dans laquelle 1 à 4 atomes de cycle sont choisis indépendamment parmi l'azote, l'oxygène ou le soufre, cycloalkyle en C₃ à C₂₀ non substitué ou substitué et cycle hétéroalicyclique de 3 à 16 chaînons non substitué ou substitué dans laquelle 1 à 4 atomes de cycle sont choisis indépendamment parmi l'azote, l'oxygène ou le soufre ; et
m est un nombre entier de 1 à 6.
